# FASCICULE DE BREVET EUROPEEN

(11) **EP 3 003 054 B1**
(45) Date de publication et mention de la délivrance du brevet: **22.03.2017**
(21) Numéro de dépôt: 13811576.1
(22) Date de dépôt: 20.12.2013
(51) Int. Cl.: A23C 19/097, B65D 85/76

(54) **PORTION DE FROMAGE ET PROCÉDÉ DE PRODUCTION ASSOCIÉ**
KÄSEPORTION UND ZUGEHÖRIGES HERSTELLUNGSVERFAHREN
CHEESE PORTION AND RELATED PRODUCTION METHOD

(30) Priorité: 27.05.2013 FR 1354763
(43) Date de publication de la demande: 13.04.2016
(73) Titulaire: Fromageries Bel, 92150 Suresnes (FR)
(72) Inventeur: VERNIER, Alexandre, F-41100 Naveil (FR)
(74) Mandataire: Lavoix
(86) Numéro de dépôt international: PCT/EP2013/077849
(87) Numéro de publication internationale: WO 2014/191065

(56) Documents cités:
- EP-A1- 0 211 786
- EP-A1- 2 314 450
- EP-A2- 0 224 908
- WO-A1-2004/052753
- FR-A1- 2 637 872
- FR-A1- 2 854 871
- FR-A1- 2 926 792
- FR-A1- 2 952 361
- FR-A1- 2 966 447
- FR-E- 84 514
- GB-A- 496 871
- US-A- 2 949 372
- US-A- 3 844 472

## Description

L'invention concerne en général les fromages fondus, frais fondu ou frais thermisé conditionnés sous forme de portions individuelles de 5 à 30g, et notamment les procédés de fabrication de telles portions de fromage.

Plus précisément, l'invention concerne selon un premier aspect une portion de fromage frais, frais fondu ou frais thermisé du type comprenant :
- une feuille d'emballage ayant un grammage compris entre 20 à 50 g/m2 pliée en forme de coquille creuse, avec un fond et une paroi latérale séparée du fond par un premier pli;
- une dose de fromage emballée dans la feuille, le fromage étant coulé à chaud entre 70°C et 85°C à l'état liquide ou visqueux dans la coquille;
- un couvercle, scellé de manière étanche à la coquille, la portion de fromage ne comprenant pas de volume mort;
caractérisée en ce que la feuille ne comporte pas de couche d'aluminium, la feuille comportant au moins une couche de papier ayant une face interne tournée vers le fromage et une face externe opposée au fromage, une couche scellante basse température, au moins une couche étanche à l'eau interposée entre la face interne de la couche de papier et la couche scellante, et au moins une couche externe étanche à l'eau couvrant la face externe de la couche de papier, la couche scellante étant une couche de polymère ou une couche de laque ou une couche de vernis et ayant une température de fusion inférieure à 90°C, la couche scellante étant appliquée sur la face externe ou sur la face interne du couvercle, la couche de papier ayant une épaisseur comprise entre 20 et 150 micromètres.

Selon un second aspect, l'invention porte sur un procédé de fabrication d'une portion de fromage ayant les caractéristiques ci-dessus.

### Etat de l'art

On connait des emballages en aluminium laqué utilisés pour le conditionnement des fromages fondus. Ces emballages présentent de nombreux avantages. L'aluminium offre une bonne protection au fromage vis-à-vis de l'environnement extérieur, car il constitue une couche barrière notamment vis-à-vis des gaz et des odeurs. Il est économique permet l'utilisation d'un système facilitant l'ouverture et permet des cadences industrielles élevées de l'ordre de 90 à 130 cps/min.

Par exemple, le document FR2966447 décrit un ensemble de conditionnement comprenant une feuille d'emballage et une dose de produit emballé dans la feuille d'emballage, le produit ayant une texture pâteuse ou semi-liquide au moment du conditionnement dans la feuille d'emballage. La feuille d'emballage comporte au moins une première couche en un métal ou un alliage métallique, au moins une seconde couche en un matériau apportant une rigidité à la feuille, et une couche d'une cire assurant la liaison des première et seconde couches l'une à l'autre, la feuille d'emballage étant pliée de manière à définir un fond et une paroi latérale circonférentielle comportant entre trois et huit pans circonférentiels et un même nombre de soufflets raccordant les pans les uns aux autres.

Toutefois, l'aluminium nécessite une grande quantité d'énergie pour sa première production, de telle sorte que les emballages en aluminium présentent un bilan environnemental défavorable. Par ailleurs, l'aluminium dans les épaisseurs utilisées pour les emballages est très mince, et présente une certaine fragilité. Il peut se déchirer ou se perforer quand il est soumis à des contraintes mécaniques excessives, par exemple dans des conditions de transport difficile.

On connait également des emballages en plastique pour portion de fromage fondu, frais fondu tel que décrit dans le brevet WO 2009/092966. Le plastique présente un bilan environnemental plus intéressant que l'aluminium, notamment au niveau de la consommation d'énergie primaire et de l'impact sur l'effet de serre. Mais son absence total de mémoire de pliage (ou dead-fold) complique fortement son industrialisation imposant le chauffage du matériau lors de la mise en forme et limitant de fait les cadences des machines

Par ailleurs les fromages traditionnels sont classiquement conditionnés dans des papiers d'emballages sous forme solide. Le caractère solide de ces fromages au moment du conditionnement rend le pliage de la feuille autour du fromage facile. Le procédé de conditionnement de ce type de fromage est très différent de celui de la présente invention.

En effet, pour ce type de conditionnement les fromages traditionnels étant dans un état solide au moment de leur conditionnement, le produit joue le rôle de piston et de support au pliage : le produit et la feuille sont poussés dans une chambre de pliage. L'emballage est replié sur le fromage en prenant appui sur celui-ci, sans besoin de contrepartie mécanique. Généralement l'emballage est ensuite collé par une étiquette en pressant sur le produit, ou scellé sur lui-même. Dans ce cas, les systèmes de pliage et du maintien du pliage pouvant appuyer sur le produit, la mise en forme et la fermeture de l'emballage sont grandement facilités par rapport à l'application décrite dans l'invention.

Il est aussi connu de l'état de la technique un emballage papier tel que décrit dans GB 496 871 comportant un revêtement protégeant le papier de l'eau et permettant un scellage par pression ou chauffage. Le revêtement utilisé dans ce brevet, à base de cire et de caoutchouc, n'est pas adapté au conditionnement de produit chaud, ne garantissant pas l'inertie de l'emballage dans le contexte réglementaire actuel. Il n'est pas possible d'obtenir une conservation de plusieurs mois, comme souhaité, avec le revêtement décrit, les migration lié au revêtement pouvant altérer le goût du fromage. De plus, l'application décrite porte sur des produits de 230g et plus. La réalisation du pliage est bien plus complexe sur les portions de petites tailles à haute cadence industrielle.

### Problème technique à résoudre

Ainsi le problème technique à résoudre par la présente invention est de trouver un emballage de conditionnement d'une portion de fromage qui puisse s'adapter aux machines industrielles existantes qui présente un meilleur bilan environnemental, tout en restant économique et, possédant des propriétés mécaniques suffisantes pour résister à une cadence industrielle de 90 à 130 cps/min, et à des conditions de transport difficiles de type grand export, tout en étant d'ouverture facile et permettant une durée de conservation de plusieurs mois.

### Résumé de l'invention

À cette fin, l'invention porte sur une portion de fromage frais, frais fondu ou frais thermisé du type précité, caractérisée en ce que la feuille ne comporte pas de couche d'aluminium, la feuille comportant au moins une couche de papier ayant une face interne tournée vers le fromage et une face externe opposée au fromage, une couche scellante basse température, au moins une couche étanche à l'eau interposée entre la face interne de la couche de papier et la couche scellante, et au moins une couche externe étanche à l'eau couvrant la face externe de la couche de papier, la couche scellante étant appliquée sur la face externe ou sur la face interne du couvercle, la couche de papier ayant une épaisseur comprise entre 20 et 150 micromètres.

### Définitions

### Portion :

Dans le cadre de la présente invention, on entend par « portion » une quantité de fromage dans un emballage de conditionnement dont le poids est compris entre 5 et 30g.

### Papier :

Le terme papier est défini comme étant un matériau se présentant sous forme de feuille constitué de fibres de cellulose entremêlées pouvant contenir des additifs pour assurer la cohésion de la feuille et l'état de surface, additifs classiquement utilisés dans la fabrication du papier tel que les charges minérales, l'amidon, les colles etc... il existe une grande variété de papier changeant par la nature de leurs fibres, des additifs et des traitements mécaniques qu'ils peuvent subir. Dans le cadre de l'invention, le grammage est compris entre 20 et 50 g/m2, de préférence entre 30 et 40g/m2. Les grades privilégiés comportent des fibres courtes pour permettre une bonne déchirure, ayant subi peu de traitement mécanique pour conserver une main (rapport épaisseur/grammage) importante pour la qualité du pliage, un couchage de surface pour l'aspect extérieur et l'imprimabilité, d'épaisseur inférieure à 150 µm, et préférentiellement compris entre 20 et 50 µm, et une compatibilité avec l'usage en agro-alimentaire

### Etanche à l'eau

On entend ici par étanche à l'eau le fait que la face interne présente une perméabilité faible à l'eau liquide et/ou à la vapeur d'eau inférieure à 500 g.µm/m².24h.atm, de préférence inférieure à 100 g.µm/m².24h.atm, encore de préférence inférieure à 50 g.µm/m².24h.atm. Ainsi, le papier est protégé de l'eau sous forme liquide ou vapeur provenant du fromage, ce qui limite le risque que le papier se délite sous l'effet de l'absorption d'eau. La perméabilité à l'eau d'une face externe de la feuille opposée au fromage est supérieure à la perméabilité de la face interne, pour faciliter l'évacuation de l'humidité provenant du fromage.

### Avantages de l'invention

L'utilisation d'une feuille comprenant au moins une couche de papier permet d'améliorer le bilan environnemental du procédé. Le papier remplace la couche d'aluminium. Ainsi, la feuille ne comporte pas de couche d'aluminium.

Par ailleurs, le papier de l'invention doit présenter une bonne mémoire de pliage (dead fold en anglais). En conséquence, la feuille est ainsi facilement pliable, ce qui est important pour former la coquille dans laquelle on va couler le fromage liquide et chaud. Le pliage est également stable dans le temps séparant la mise en forme et le dosage du fromage. La feuille de la présente invention est stable en température (pas de déformation ou de trou au contact du fromage chaud). Une feuille plastique telle que décrite dans le brevet WO 2009/092966 n'a pas les mêmes qualités, car on doit la chauffer pour mémoriser un pli.

### Fromages conditionnés

L'invention s'applique typiquement au fromage fondu. Elle s'applique aussi au fromage frais, frais fondu et à toutes les spécialités fromagères présentant une consistance fluide, semi liquide ou liquide au moment de la coulée. On entend ici par fromage ou spécialité fromagère les produits issus de la transformation du lait en fromage, que ces produits soient constitués totalement de matière première d'origine laitière ou mélangés avec des matières premières d'origine végétale (protéine, matière grasse, céréale, etc.).

Typiquement, le fromage conditionné de la présente invention est inerte, c'est-à-dire qu'il ne mature pas et ne dégage pas de gaz après conditionnement dans la feuille d'emballage, ce qui autorise à réaliser un emballage étanche pour ces fromages.

Ces fromages sont coulés à chaud, c'est-à-dire typiquement entre 70°C et 85°C. En effet, si le fromage est coulé à froid, il présente une texture qui ne lui permet pas de remplir l'emballage. Pour garantir le remplissage, on a besoin d'un produit liquide visqueux, qui s'écoule et remplit chaque recoin de l'emballage. La température du fromage sert également d'aide au scellage : quand on plie le couvercle avec la coquille, on crée un contact intime entre ces deux éléments. On vient ensuite presser un fer de scellage sur le dessus de l'emballage. Ce fer amène de la chaleur sur le dessus. La chaleur du fromage par le dessous est nécessaire : sur un produit froid, les pertes de chaleur par le produit lors du scellage ne permettraient pas d'atteindre la température nécessaire au scellage. La chaleur du fromage présente également l'avantage d'apporter un certain niveau de sanitation de l'emballage.

### Avantages de l'invention pour les fromages

Ainsi, l'invention permet d'obtenir une propreté qui tend vers la stérilité, ce qui confère à la portion de fromage une longue conservation sans développement microbien.

Le fait que la feuille soit pliée en coquille creuse est particulièrement avantageux pour le conditionnement d'un fromage mou à chaud. Un tel fromage ne se tient pas tout seul à chaud, pendant les opérations de conditionnement. Le fromage reste mou après refroidissement, mais se tient. Lors du dosage, on a besoin d'un contenant pour recevoir le fromage et lui permettre de prendre la forme finale désirée. Après refroidissement, le fait que le fromage soit serré dans l'emballage (pas d'espace ou de volume mort entre le fromage et la feuille d'emballage) permet de limiter les déformations de l'emballage et du fromage. L'absence d'espace de tête joue également un rôle positif sur la conservation du produit, limitant les risques d'oxydation ou de synérèse notamment.

Grâce à la présente invention, le fromage emballé a des propriétés de conservations optimales. Il peut se conserver plusieurs mois, dans des conditions hors froid pour certains.

### Scellage et couche scellante :

De façon plus détaillée, la feuille d'emballage doit comporter une couche permettant un scellage de la coquille sur elle-même. Cette couche est une couche de polymères, ou une couche de laque ou une couche de vernis.

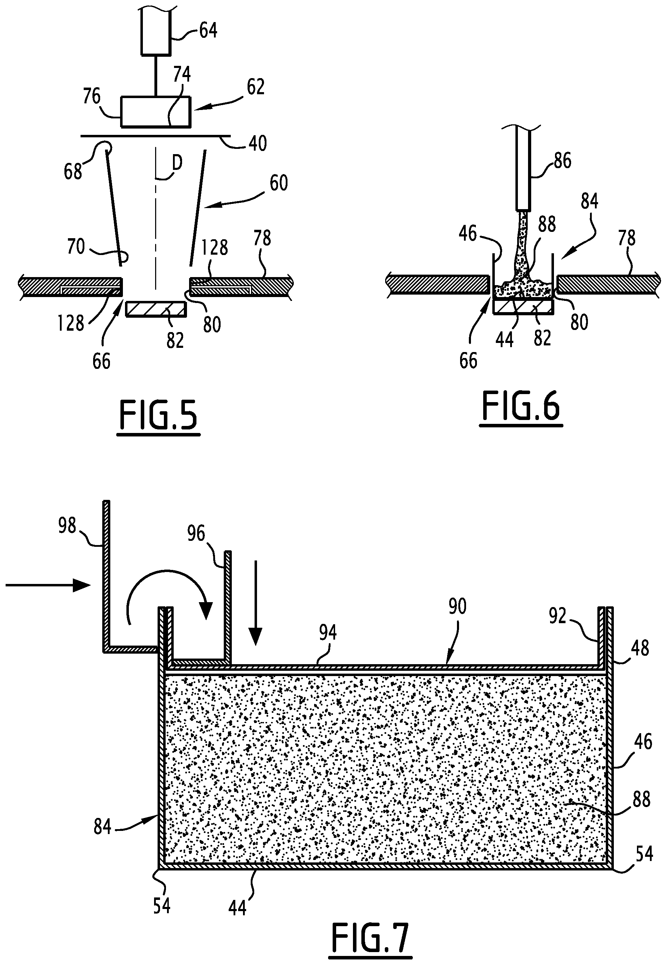

La température de fusion de la couche scellante doit être inférieure à 90°C, de préférence inférieur à 80°C, ce qui permet d'assurer un scellage en s'aidant de la chaleur dégagée par le fromage. Ce revêtement doit être appliqué sur la face interne de la couche de papier de la coquille, et sur la face externe du couvercle (en contact avec la coquille). En variante, comme représenté sur la figure 7, le revêtement permettant le scellage est appliqué sur la face interne du couvercle. La face externe du couvercle dans ce cas est de préférence scellable sur elle-même.

### Couches barrière à l'eau

La feuille doit comporter également une couche étanche à l'eau entre la couche scellante et la couche papier. Cette couche a pour fonction de protéger le papier de l'humidité du produit et d'éviter la dégradation des qualités mécaniques du papier dans le temps, et également éviter la perte d'eau du produit pour conserver ses qualités organoleptiques et notamment sa texture.

La couche externe étanche à l'eau a pour fonction de protéger le papier de l'humidité extérieure et d'éviter la dégradation des qualités mécaniques du papier dans le temps.

La structure type de la feuille d'emballage de l'intérieur vers l'extérieur est donc :
Fromage / couche scellante basse température / couche étanche à l'eau / couche de papier / éventuellement impression / couche externe étanche à l'eau.

En variante, la couche étanche à l'eau et la couche scellante sont une seule et même couche constituée d'un même matériau. La couche de scellage peut être réalisée en même temps que la couche étanche à l'eau quand celle-ci cumule la double propriété de barrière à l'humidité et de scellage à basse température. Par ailleurs, la feuille peut comporter d'autres couches entre la couche scellante et la face interne de la cocuhe de papier.

En variante, la feuille d'emballage comprend d'autres couches entre la face externe de la couche de papier et la couche externe étanche à l'eau.

### Les traitements d'étanchéité

Avantageusement, la couche étanche à l'eau, interposée entre la face interne et la couche scellante, comprend au moins l'une des couches suivantes : couche de laque étanche à l'eau, couche de vernis étanche à l'eau, couche de matière plastique.

La feuille ne comprend pas de couche de cire.

Cette couche étanche à l'eau permet de rendre la face interne étanche à l'eau.

L'étanchéité du côté interne de la couche de papier peut être renforcée par différents moyens.

Par exemple, la face interne de la couche de papier peut porter un greffage chimique d'acide gras.

De plus, la face interne de la couche de papier peut subir un traitement de surface d'étanchéification chimique, par exemple à l'acide sulfurique, par un produit à base de silicone ou par un fluorure. Elle peut aussi subir un traitement d'étanchéification mécanique, par gaufrage et/ou par calandrage.

En outre, la couche de papier peut subir un traitement d'étanchéification dans la masse, et contenir un produit à base de silicone, et/ou un fluorure dispersé dans le papier dans une proportion massique par rapport au papier choisie pour rendre la couche de papier étanche à l'eau.

Ces différents traitements d'étanchéité peuvent être combinés entre eux.

Le traitement dans la masse est particulièrement adapté pour le couvercle dont la tranche peut présenter le matériau papier en contact direct avec le fromage.

Côté externe, la couche externe étanche à l'eau comprend au moins l'un d'une couche de laque étanche à l'eau, d'un vernis étanche à l'eau, d'une couche de matière plastique.

### La couche de papier

Dans l'état de la technique, il est de pratique courante d'utiliser une feuille de papier avec un grammage important de l'ordre de 80g/m² pour obtenir un pliage optimal. Cependant, pour obtenir un réel avantage environnemental et préserver l'intérêt économique du matériau comparativement aux solutions à base d'aluminium, le papier doit être fin c'est-à-dire que le grammage du papier doit être compris entre 20 à 50g/m², préférentiellement entre 30 à 40g/m², ce qui engendre des problèmes techniques de pliage, de résistance mécanique, de conservation.

Le matériau papier doit avoir un dead-fold optimal. Pour cela, il est nécessaire de travailler avec des matériaux papier ayant une épaisseur importante (typiquement comprise entre 20 et 50 µm, mais inférieure à 150 µm) pour un grammage donné, c'est-à-dire des matériaux avec une main (rapport épaisseur sur grammage) importante, par opposition aux matériaux peu épais qui ont été calandrés.

Pour permettre la formation d'une coquille, le matériau doit être transformé avec la mécanisation adapté afin de conserver sa forme pendant les différentes étapes du procédé de fabrication.

### Dead-fold/relaxation

Avantageusement, la paroi latérale, après pliage de la feuille et avant coulée du fromage dans la coquille, forme avec le fond un angle prédéterminé, avec une relaxation possible vers l'extérieur de 15° maximum, du fait que la feuille présente un affaiblissement le long d'au moins une ligne destinée à former le premier pli, et/ou que le premier pli a subi un écrasement. L'angle prédéterminé vaut par exemple sensiblement 90°.

En d'autres termes, la paroi latérale forme avec le fond un angle compris entre l'angle prédéterminé et l'angle prédéterminé +15°. On entend ici par relaxation, le fait que, après pliage, la feuille a tendance à se déplier partiellement. Les premiers plis s'ouvrent partiellement. Dans l'invention, l'utilisation d'une feuille avec une couche de papier permet de limiter la relaxation, notamment par rapport aux matériaux plastiques déjà décrits pour la réalisation de telle portion dans WO 2004 052753A1. Ceci facilite la fabrication de la portion de fromage, notamment la manipulation et le transfert de la coquille dans la chaîne de fabrication. La relaxation est de préférence inférieure à 10°, et encore de préférence inférieure à 5°. L'obtention de cette caractéristique est obtenue par l'utilisation d'un papier ayant un grammage compris entre 20 à 50g/m² recouvert par des couches de faibles épaisseurs tel que décrit ci-dessous, pour limiter la dégration du dead-fold.

### Proportion de papier dans le matériau

Avantageusement, la feuille présente une première épaisseur, la couche de papier présentant une seconde épaisseur au moins supérieure à 30%, et avantageusement supérieure à 50% de la première épaisseur. En d'autres mots, le papier représente au moins 30% de l'épaisseur du matériau et idéalement plus de 50% de l'épaisseur totale (papier avec les couches intérieure (couche scellante et couche étanche) et extérieure).

Ceci permet de conférer à la feuille une bonne mémoire de forme. Typiquement, l'épaisseur de la feuille de papier est compris entre 20 et 40µm, les couches appliquées côté intérieur entre 6 et 12µm, les couches appliquées côté extérieur entre 2 et 6µm. La protection extérieure est idéalement assurée par un vernis de quelques microns n'altérant pas les propriétés mécanique du matériau papier.

Ceci signifie en d'autres termes, que la feuille ne comporte pas trop de plastique. Plus le ratio plastique / papier est faible (plus il y a de papier par rapport au plastique), plus le matériau présentera un dead-fold intéressant pour l'application, plus ce ratio est grand (plus il y a de plastique par rapport au papier), plus le matériau est nerveux et présente un mauvais dead fold et aura tendance à s'ouvrir après l'étape de mise en forme.

### Système d'ouverture

Avantageusement, la portion comporte un système d'ouverture agencé pour provoquer l'ouverture de la feuille d'emballage quand le système d'ouverture est sollicité par un utilisateur. L'ouverture de la portion de fromage est facilitée.

Le système d'ouverture est de tout type adapté : bande de matériau résistant ou fil intégré dans la portion et permettant de forcer la déchirure de la feuille ou du scellage, affaiblissements de la feuille délimitant une zone susceptible d'être déchirée manuellement par l'utilisateur, utilisation d'un matériau scellage offrant une pelabilité après refroidissement etc. La solution préférentiellement utilisée est l'usage d'une bande d'arrache en matériau résistant, typiquement un film de PET, ou d'un autre matériau plastique résistant, collé sur le matériau à l'endroit souhaité pour la déchirure. Ce type de système est également nommé tear-strip, ou Tircel (marque déposé par la société Rexor).

### Influence du papier sur la qualité de déchirure

Le papier doit être adapté pour permettre une déchirure de bonne qualité. La sélection se fait par un test de déchirure dans lequel on plie l'échantillon de matériau papier sur le chant d'une planche en plastique, on colle à l'intérieur du matériau papier une bande adhésive, on fixe le matériau papier sur les côtés de la planche, et on tire la bande adhésive. L'observation du bord de la déchirure permet de juger si le matériau papier est adapté pour un tel mode d'ouverture. L'obtention d'une déchirure droite est importante pour conserver une fonctionnalité d'ouverture satisfaisante, et son aspect est important pour l'acceptation du matériau par le consommateur.

Ainsi, on sélectionne préférentiellement pour l'application un papier avec des fibres de cellulose courte, on adapte la géométrie pour que préférentiellement la déchirure se réalise parallèlement au sens machine, et on sélectionne des matériaux pour les couches recouvrant la couche de papier qui présentent un étirement faible lors de la déchirure, ou orienté et permettant une déchirure nette.

### Les autres couches de la feuille d'emballage :

La feuille d'emballage comporte en variante, en plus de la couche de papier, de la couche scellante, de la couche étanche à l'eau et de la couche externe étanche à l'eau, diverses couches supplémentaires prévues pour augmenter l'étanchéité à l'eau, aux odeurs, aux gaz, pour améliorer le scellage de la feuille sur elle-même, pour conférer une tenue mécanique à la feuille, ou pour décorer la feuille, cette liste n'étant pas limitative.

### Autres caractéristiques :

La portion de fromage peut également présenter une ou plusieurs des caractéristiques ci-dessous, considérées individuellement ou selon toutes les combinaisons techniquement possibles.

### Température de coulée

Avantageusement, le fromage est coulé dans la coquille à une température de coulée, la feuille comprenant une couche scellante scellant la coquille au couvercle et ayant une température de fusion comprise entre la température de coulée + 10° et la température de coulée - 10°.

Ainsi, la chaleur dégagée par le fromage contribue au scellage de la coquille et du couvercle.

### Le couvercle

Selon un premier mode de réalisation, le couvercle est une zone de la feuille. Il est venu de matière avec la coquille.

Selon un second mode de réalisation, le couvercle n'est pas une zone de la feuille et comporte au moins une couche de papier ayant une face interne tournée vers le fromage, au moins la face interne étant étanche à l'eau. Il n'est pas venu de matière avec la coquille.

Dans ce second mode de réalisation, le couvercle présente avantageusement la structure suivante :
Fromage/couche étanche à l'eau/couche de papier/ éventuellement impression/ couche externe étanche à l'eau/couche scellante.

La couche de papier, la couche scellante, la couche étanche à l'eau et la couche externe étanche à l'eau ont avantageusement les caractéristiques décrites ci-dessus, pour la feuille d'emballage. Le couvercle subit avantageusement les traitements d'étanchéité décrits dans le paragraphe ci-dessus.

Dans les deux modes de réalisation, le couvercle permet de recouvrir le fromage et offre une surface pour le scellage de la portion (coquille-couvercle). Le second mode de réalisation nécessite moins de matériau. De ce fait, il génère moins de plis, rendant le scellage moins complexe et l'étanchéité plus fiable.

### Procédé de fabrication

### Description des étapes

Selon un second aspect, l'invention porte sur un procédé de fabrication d'une portion de fromage ayant les caractéristiques ci-dessus, le procédé comprenant au moins :
- une étape d'approvisionnement de la feuille d'emballage ;
- une étape de pliage de la feuille, au cours de laquelle au moins un premier pli est formé dans la feuille, celle-ci adoptant la forme d'une coquille creuse avec un fond et une paroi latérale séparé du fond par le premier pli;
- une étape de remplissage de la coquille, en coulant le fromage dans ladite coquille,
le procédé comprenant en outre une étape d'affaiblissement de la feuille le long d'au moins une ligne destinée à former le premier pli, et/ou un écrasement d'au moins le premier pli.

### Affaiblissement/ écrasement pour le pliage

L'affaiblissement et/ou l'écrasement sont réalisés sans chauffage de la feuille.

La mémoire de forme de la couche de papier est nettement moins bonne que la mémoire de forme d'une couche d'aluminium. En d'autres termes, quand une couche d'aluminium est pliée, elle garde spontanément sa forme et n'a pas tendance à se réouvrir. Au contraire, quand une couche de papier est pliée, elle aura tendance à se réouvrir, au moins partiellement. L'ajout d'une étape d'affaiblissement des lignes de pliage ou d'un écrasement des plis permet de compenser le fait que la couche de papier ait une moins bonne mémoire de forme qu'une couche d'aluminium. L'affaiblissement de la feuille le long des lignes de pliage, ou l'écrasement des plis, a pour effet de casser la structure de la couche de papier et de fixer le pli. La mémoire de forme du papier est néanmoins très supérieure à celle du plastique, de telle sorte qu'il est possible de réaliser l'opération de pliage avec des équipements proches de ceux utilisés pour une feuille d'aluminium, ce qui n'est pas le cas pour des feuilles majoritairement plastiques.

Il est ainsi possible de fixer le pli sans apport de chaleur, ce qui simplifie considérablement le procédé de fabrication. La limitation du recours au chauffage du matériau pour sa mise en forme permet d'accéder à des cadences de production similaires à celle obtenues avec le matériau aluminium, ce qui n'est pas le cas avec le matériau plastique. La réalisation de ces plis à grande cadence nécessite néanmoins d'utiliser des procédés adaptés tels que décrit dans l'invention.

On entend ici par affaiblissement de la feuille l'application à la feuille d'un traitement permettant de diminuer la rigidité de la feuille le long de la ou des lignes destinées à former le ou les premiers plis. Cet affaiblissement permet notamment de casser les fibres de la couche de papier le long desdites lignes. Il en résulte que le pliage de la feuille le long de la ou desdites lignes est facilité, et que la mémoire au pliage de la feuille est améliorée.

L'affaiblissement peut être réalisé en appliquant un traitement mécanique à la feuille ou tout autre type de traitement adapté. Par exemple, l'affaiblissement est un rainage obtenu en appliquant un filet rainant le long de la ligne de pliage destinée à former le premier pli. En variante, l'affaiblissement est obtenu en déplaçant un galet le long de la ligne de pliage, ou par un traitement thermique au laser permettant d'enlever une partie de la matière pour créer une zone de fragilité, etc.

On entend ici par écrasement d'un pli une opération constituant à pincer le pli, en sollicitant les zones de la feuille située immédiatement de part et d'autre du pli l'une vers l'autre, avec une pression significative. Cet écrasement a sensiblement le même effet que l'affaiblissement, à savoir qu'il permet de casser la structure de la feuille le long du pli. En particulier, les fibres intégrées dans la couche de papier sont « cassées », ce qui a pour effet d'affaiblir la structure de la feuille. Ceci permet d'améliorer la mémoire au pliage de la feuille.

Ainsi, les opérations de pliage sont mécaniques, et un bon pliage est obtenu en pressant fortement les plis ou en appliquant une contrainte mécanique forte lors de le formation. Pour compléter le maintien en forme de la coquille, on utilise des systèmes complémentaires du type collage sur l'extérieur de la coquille, et/ou système de maintien dans l'alvéole par le vide.

### Les premiers plis

L'étape de pliage conduit à la formation d'un ou plusieurs premiers plis, en fonction de la forme de la portion de fromage, et notamment de la forme du fond. Quand le fond est triangulaire, trois premiers plis sont formés à l'aide de pliage. Pour un fond circulaire, un seul premier pli est formé. Il est possible également de former deux premiers plis, quatre premiers plis ou n'importe quel nombre de premiers plis.

### Les seconds plis

Selon une variante de réalisation, au cours de l'étape de pliage au moins un second pli est formé dans la feuille, le second pli divisant la paroi latérale en plusieurs pans, le procédé comprenant une étape d'affaiblissement de la feuille le long d'au moins une ligne destinée à former le second pli, et/ou un écrasement d'au moins le second pli. L'affaiblissement ou l'écrasement est réalisé de préférence sans chauffage de la feuille.

Les avantages techniques sont les mêmes que ceux décrits relativement à la formation du premier pli, à savoir faciliter le pliage de la feuille et améliorer la mémoire au pliage de la feuille.

La paroi latérale peut comporter un nombre quelconque de seconds plis, en fonction de la forme de la portion de fromage. Quand la paroi latérale est cylindrique, elle comporte un grand nombre de seconds plis. Quand le fond est triangulaire, la paroi latérale comporte trois seconds plis. Quand le fond est carré ou rectangulaire, la paroi latérale comporte quatre seconds plis. La paroi latérale peut également comporter deux seconds plis, ou plus de quatre seconds plis.

### Formation des plis par passage dans une cheminée

Selon une variante de réalisation, l'étape de pliage de la feuille est réalisée en poussant la feuille à l'aide d'un piston à travers une cheminée de pliage, le piston ayant une face frontale et une surface latérale, la face frontale étant au contact de la feuille et ayant une forme identique à celle du fond, la cheminée ayant une pluralité de lames agencées pour réaliser les premier et second plis et rabattre la paroi latérale de la coquille contre la surface latérale du piston.

Une telle méthode de pliage est particulièrement bien adaptée dans le cas présent, car elle permet de contrôler l'écrasement des premier et second plis, en réglant l'écartement des lames les unes par rapport aux autres, ou par rapport au piston.

L'agencement de la cheminée est fonction de la forme de la portion de fromage. De telles cheminées sont connues et ne seront pas décrites en détail ici.

### Affaiblissement pour la formation des premiers plis

Selon une variante de réalisation, l'affaiblissement est réalisé en pinçant la feuille entre un filet en saillie autour de la face frontale du piston et un tampon. On réalise ainsi commodément un rainage de la feuille au niveau des lignes destinées à former les premiers plis.

Dans ce cas, le tampon comporte avantageusement une surface en un matériau élastique contre laquelle est appliqué le filet. Ceci permet au filet de s'enfoncer dans le matériau élastique, et donc d'augmenter la contrainte appliquée par le filet le long des lignes de pliage.

Par ailleurs, le tampon peut comporter une rainure en creux dans lequel vient s'engager le filet. Comme précédemment, ceci permet d'augmenter la contrainte appliquée à la ligne de pliage par le filet.

### Ecrasement des premiers plis

Selon une variante de réalisation, l'écrasement du premier pli est réalisé en sollicitant la feuille à l'aide du piston à l'intérieur d'une alvéole.

L'alvéole présente typiquement une forme conjuguée de celle de la coquille creuse. En sollicitant fortement la feuille à l'aide du piston à l'intérieur de cette alvéole, on plaque le fond de la coquille creuse contre le fond de l'alvéole, et la paroi latérale de la coquille creuse contre la paroi de l'alvéole. Ceci a pour effet de réaliser un écrasement contrôlé des premiers plis. Les alvéoles sont typiquement ménagées dans un carrousel qui déplace la coquille entre différents postes correspondant chacun à une étape du procédé. Une cinématique linéaire de déplacement des alvéoles sur une chaine est également possible, la chaine déplaçant l'alvéole contenant la coquille entre les différents postes correspondant chacun à une étape du procédé.

Dans ce cas, l'écrasement du premier pli est avantageusement amorti par un ressort interposé entre le piston et un actionneur prévu pour déplacer les pistons, ou entre un tampon constituant le fond de l'alvéole et un support fixe.

Ceci permet d'éviter tous les problèmes d'ajustement mécanique, notamment l'ajustement de la course du piston. Dans la première variante de réalisation, le ressort est interposé entre l'actionneur prévu pour le déplacement du piston et le piston lui-même. Ainsi, quand le piston entre en contact avec le fond de l'alvéole, un déplacement supplémentaire de l'actionneur se traduit par une compression du ressort. Alternativement, l'alvéole présente un fond mobile, monté sur un support fixe par l'intermédiaire du ressort. En d'autres termes, le fond de l'alvéole peut se déplacer par rapport à la paroi de l'alvéole, et notamment s'enfoncer à l'encontre de la force de rappel du ressort.

Alternativement, le piston est lié à une tige verticale reposant en appui sur une roue excentrique formant came. Pendant une moitié de la rotation de la roue, quand le point d'appui de la tige évolue depuis un rayon relativement plus grand vers un rayon relativement plus petit, le piston descend sous son propre poids. La course de la came est plus longue que nécessaire pour déplacer le piston jusqu'au fond de l'alvéole, le piston arrêtant son mouvement plus tôt par contact avec le fond de l'alvéole. Pendant l'autre moitié de la rotation de la roue, quand le point d'appui de la tige évolue depuis un rayon relativement plus petit vers un rayon relativement plus grand, le piston est repoussé vers le haut par la came.

En variante, le piston est déplacé par un vérin pneumatique. Le mouvement du piston est arrêté quand celui-ci vient au contact du fond de l'alvéole. Si ce contact intervient avant la fin de course du vérin pneumatique, l'effort appliqué par le piston sur le fond de l'alvéole est contrôlé par l'intermédiaire de la pression d'air au sein du vérin pneumatique et par le diamètre du vérin.

### Maintien de la coquille sur le piston par tirage au vide

Selon une variante de réalisation, le fond de la coquille est maintenu plaqué contre la face frontale du piston par tirage au vide à travers ladite face frontale. Ainsi, la feuille est plaquée de manière intime contre la face frontale du piston avant et pendant l'étape de pliage de la feuille. La feuille ne peut pas s'écarter du piston au niveau de la zone qui deviendra le fond de la coquille. L'entrée de la feuille dans la cheminée rabat la paroi latérale de la coquille creuse contre la surface latérale du piston. La feuille étant mieux plaquée contre le piston, les premier et second plis sont d'une meilleure qualité.

Pour tirer au vide, on prévoit une pluralité de trous dans la face frontale du piston, ces trous étant raccordés à un dispositif d'aspiration tel qu'une pompe à vide.

### Ecrasement des seconds plis

Selon une variante de réalisation, l'écrasement du second pli est réalisé par pincement entre des lames de la cheminée et/ou par pincement entre les lames de la cheminée et le piston.

En effet, contrairement à l'aluminium qui risque d'être troué ou déchiré par une friction trop forte lors du pliage, une couche de papier peut subir ce type de friction sans dommage. Il est ainsi possible de prévoir des jeux réduits entre les lames dans la cheminée de pliage et entre le piston et la cheminée. Ces jeux réduits conduisent à un pincement du ou des seconds plis lors du passage de la feuille dans la cheminée.

Selon une variante de réalisation, l'écrasement du second pli est réalisé par une pièce de friction liée à la cheminée par un organe élastique sollicitant ladite pièce de friction contre le piston, la pièce de friction étant par exemple un galet.

L'écrasement du second pli par la pièce de friction vient en plus ou à la place de l'écrasement du second pli entre les lames de la cheminée et/ou entre les lames de la cheminée et du piston.

Ainsi, quand le piston est déplacé à travers la cheminée, les seconds plis sont réalisés dans la feuille, ces seconds plis étant écrasés entre la pièce de friction et le piston sous l'effet de la force de rappel de l'organe élastique quand le piston sort de la cheminée. La pièce de friction est typiquement une pièce en polymère ayant un état de surface adapté pour ne pas endommager la feuille. La surface de la pièce de friction venant en contact avec la feuille est de forme adaptée pour réaliser l'écrasement. Quand la pièce de friction est un galet, il est lié à l'organe élastique par l'intermédiaire d'une liaison pivot permettant au galet de rouler contre la feuille en réalisant l'écrasement du second pli. En variante, la pièce de friction est un galet rigidement fixé à l'organe élastique, ou est une pièce ayant une autre forme. L'organe élastique est par exemple un ressort en spirale, ou une lame ou tout autre type de ressort adapté.

### Maintien de la coquille dans l'alvéole par tirage au vide

Selon une variante de réalisation, la coquille sortant de la cheminée est déposée dans une alvéole, la paroi latérale de la coquille étant maintenue plaquée contre l'alvéole par tirage au vide à travers une paroi de l'alvéole. Ce procédé permet de compenser le dead-fold de moins bonne qualité que pour une feuille aluminium.

Typiquement, l'étape de remplissage de la coquille par coulage du fromage est réalisée avec la coquille en place dans l'alvéole. Ainsi, entre le moment où la coquille est déposée dans l'alvéole et le moment où la coquille est remplie par le fromage, la paroi latérale de la coquille est maintenue en position dans l'alvéole par tirage au vide. Notamment, ceci empêche les premiers et seconds plis de se déplier. Pour ce faire, on prévoit une pluralité de trous dans la paroi de l'alvéole, raccordés à un organe d'aspiration tel qu'une pompe à vide.

### Adhésif externe pour maintien des seconds plis

Selon une variante de réalisation, la feuille comporte un adhésif sur des zones repérées destinées à former les seconds plis. Ce procédé permet de compenser le dead-fold de moins bonne qualité que pour une feuille aluminium.

L'adhésif est placé sur la face externe de la feuille, pour éviter tout contact avec le fromage. L'adhésif est par exemple un produit collant réactivable mécaniquement par pression sur la feuille. L'adhésif est par exemple:
- une colle à froid (cold-seal) ;
- une colle connue sous le nom de hotmelt, de préférence un hotmelt qui reste collant en surface même à température ambiante (tack résiduel à froid);
- un autre adhésif type colle ou vernis, qui reste collant à froid et permet ainsi une adhésion entre deux surfaces mises en contact et pressées l'une contre l'autre.

L'adhésif est déposé à l'intérieur des seconds plis pour maintenir ceux-ci plaqués à la coquille. Cela limite de risque d'ouverture de la portion par effet ressort de la feuille.

L'adhésif peut être déposé sur la feuille dans la ligne de fabrication de la portion, avant la mise en forme de la coquille. Ceci présente l'avantage d'éviter tout risque de collage lors du débobinage de la feuille en amont de la ligne de fabrication.

Alternativement, l'adhésif peut être déposé sur la feuille chez le fournisseur de la feuille. Ceci présente l'avantage de simplifier la ligne de fabrication de la portion.

### Troisièmes plis et couvercle

Selon une variante de réalisation, le procédé comprend :
- une étape de dépose d'un couvercle sur le fromage ;
- une étape de pliage d'un bord libre de la coquille vers le couvercle, créant au moins un troisième pli entre la paroi latérale de la coquille et ledit bord libre de la coquille ; le procédé comprenant une étape d'affaiblissement de la feuille le long d'au moins une ligne destinée à former au moins le troisième pli, et/ou un écrasement d'au moins le troisième pli, l'affaiblissement et/ou l'écrasement étant réalisé sans chauffage.

Ces étapes interviennent typiquement après l'étape de remplissage de la coquille. Le nombre de troisièmes plis dépend de la forme de la portion de fromage. L'étape de pliage peut conduire à la formation d'un troisième pli, de deux troisièmes plis, de trois troisièmes plis, ou d'un nombre quelconque de troisièmes plis.

Le couvercle est destiné à fermer la portion de fromage d'un côté opposé au fond de la coquille. Il est par exemple réalisé dans une feuille sensiblement de même structure que la coquille. En variante, la structure de la feuille formant le couvercle est légèrement différente de celle formant la coquille, pour permettre un scellage entre la face interne de la coquille et la face externe du couvercle. Dans ce cas le côté externe de la coquille comporte une couche adaptée pour le glissement sur les équipements mécaniques de fabrication et la protection du papier vis-à-vis du milieu extérieur. Le côté interne de la coquille comporte une couche adaptée pour le contact avec le fromage et le scellage avec le couvercle..

L'affaiblissement et l'écrasement du ou des troisièmes plis présentent les mêmes avantages que ceux décrits relativement aux premier et second plis.

Typiquement, l'étape de pliage du bord libre de la coquille vers le couvercle est réalisé en plaquant un doigt interne contre le couvercle, une extrémité libre du doigt interne arrivant à proximité immédiate du bord libre de la coquille, et en déplaçant un doigt externe parallèlement à une surface libre du fromage de l'extérieur vers l'intérieur de la coquille, l'écrasement du troisième pli étant réalisé par pincement entre le doigt interne et le doigt externe.

Ainsi, le doigt interne est placé vers l'intérieur de la coquille par rapport au bord libre, et le doigt externe est placé vers l'extérieur de la coquille par rapport au bord libre. Le déplacement du doigt externe conduit à rabattre le bord libre vers le doigt interne. Le jeu entre le doigt interne et le doigt externe est réduit, et est choisi pour réaliser un écrasement du troisième pli. Ceci est faisable pour une feuille contenant une couche de papier. Ceci n'est pas faisable pour une feuille contenant une couche d'aluminium, car l'aluminium risquerait d'être blessé ou déchiré lors du mouvement du doigt externe.

### Scellage du couvercle

Selon une variante de réalisation, le procédé comprend une étape de scellage du bord libre de la coquille avec le couvercle, le bord libre étant maintenu en position entre l'étape de pliage vers le couvercle et l'étape de scellage.

L'étape de scellage est typiquement réalisée thermiquement, la feuille et le couvercle comportant des couches thermofusibles placées en contact l'une contre l'autre et chauffées de manière à se coller l'une avec l'autre. En tout état de cause, il est nécessaire de plaquer le bord libre contre le couvercle au cours de l'étape de scellage. Ceci est obtenu en descendant un organe de pression qui va solliciter le bord libre de la coquille contre le couvercle. Le fait de maintenir en position le bord libre entre l'étape de pliage vers le couvercle et l'étape de scellage fait que ce bord libre peut être happé plus facilement par l'organe de pression. En l'absence d'un tel maintien, le troisième pli pourrait se rouvrir, et le bord libre se déplier en revenant vers sa position initiale. Le bord libre est par exemple maintenu en position par un ensemble de volets agencés à la manière d'un diaphragme d'appareil photo. Les volets sont tous mobiles entre une position relativement plus rapprochée d'un centre du couvercle, et une position relativement plus éloignée du centre du couvercle. Les volets sont maintenus dans la position rapprochée entre l'étape de pliage et l'étape de scellage, de manière à maintenir le bord libre en position. Les volets sont déplacés vers leur position éloignée quand l'organe de pression est approché.

L'organe de pression est par exemple un fer, destiné à chauffer le bord libre de la feuille pour réaliser le scellage.

### Affaiblissement des plis à la découpe

Selon une variante de réalisation, l'affaiblissement est réalisé avant l'étape de pliage de la feuille.

Cet affaiblissement est réalisé le long des lignes destinées à former les premiers plis et/ou les seconds plis et/ou les troisièmes plis. Il peut être réalisé le long des lignes de pliage d'un seul des trois types de plis, ou de deux des trois types de plis, ou des trois types de plis. Cet affaiblissement est réalisé typiquement avant ou pendant l'étape de découpe. En effet, la feuille est typiquement découpée dans une pièce de grande longueur, par exemple une bobine. Typiquement, l'outil de découpe de la feuille comporte des filets rainant, situés en retrait des lames, et un support agencé de telle sorte que, lors de la découpe de la feuille, les filets rainants plaquent ladite feuille contre le support. Ainsi, lors de la découpe de la feuille, celle-ci reçoit une sollicitation mécanique le long des filets rainant, au niveau des lignes de pliage.

Alternativement, l'affaiblissement est réalisé après l'étape de découpe ou avant l'étape de découpe de la feuille.

### Figures

D'autres caractéristiques et avantages de l'invention ressortiront de la description détaillée qui en est donnée ci-dessous, à titre indicatif et également limitatif, en référence aux figures annexées, parmi lesquelles :
- la figure 1 est un logigramme illustrant les principales étapes du procédé ;
- les figures 2 et 3 sont des vues en perspective de la portion de fromage obtenue à l'aide du procédé de fabrication ;
- la figure 4 est une représentation schématique simplifiée de la sous-étape de découpe de la feuille ;
- la figure 5 est une représentation schématique simplifiée du piston, de la cheminée de pliage et d'une alvéole, ces différents éléments étant mis en oeuvre au cours de l'étape de pliage de la feuille ;
- la figure 6 est une représentation schématique simplifiée de l'étape de remplissage de la coquille ;
- la figure 7 est une représentation schématique simplifiée de l'étape de pliage du bord libre de la coquille ;
- la figure 8 est une représentation schématique d'une feuille avant pliage, adaptée pour une portion de géométrie triangulaire ;
- la figure 9 est une représentation schématique simplifiée du piston et du tampon utilisés à l'étape de pliage, pour une variante de réalisation de l'invention où le piston porte un filet de rainage ;
- la figure 10 est une représentation schématique simplifiée du piston utilisé à l'étape de pliage, pour une variante de réalisation dans lequel le piston porte des orifices d'aspiration en plus du filet de rainage;
- les figures 11 et 12 sont des représentations schématiques simplifiées du piston et du tampon utilisés à l'étape de pliage, pour deux variantes de réalisation de l'invention dans lesquels le mouvement du piston est amorti par un ressort ;
- la figure 13 est une représentation schématique simplifiée du piston et de la cheminée utilisée à l'étape de pliage, pour une variante de réalisation dans laquelle la cheminée porte une pièce de friction ;
- la figure 14 est une représentation schématique simplifiée d'un diaphragme utilisé pour maintenir le bord libre de la coquille en position avant scellage ;
- les figures 15 et 16 sont des vues en coupe, schématiques, de deux variantes de réalisation de la feuille d'emballage de la portion de fromage des figures 2 et 3 ;
- la figure 17 est une représentation schématique d'une feuille avant pliage, adaptée pour une portion de géométrie parallélépipédique ; et
- la figure 18 est une représentation schématique en coupe de la coquille après pliage et avant remplissage..

### Description détaillée :

### Étapes du procédé

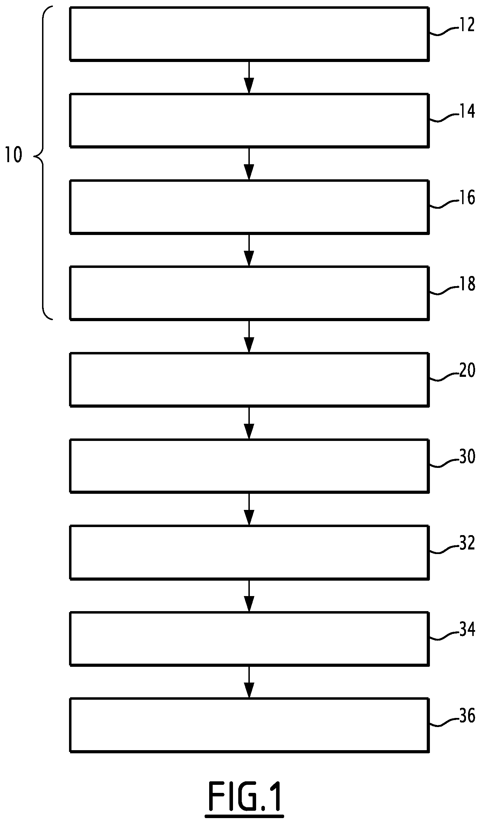

Le procédé dont le logigramme est représenté sur la figure 1 comporte au moins :
- une étape 10 d'approvisionnement d'une feuille comprenant au moins une couche de papier ;
- une étape 20 de pliage de la feuille, au cours de laquelle au moins un premier pli est formé dans la feuille, celle-ci adoptant la forme d'une coquille creuse avec un fond et une paroi latérale séparée du fond par le premier pli ;
- une étape 30 de remplissage de la coquille, en coulant du fromage dans ladite coquille.

Typiquement, au moins un second pli est formé dans la feuille au cours de l'étape de pliage 20, le second pli divisant la paroi latérale en plusieurs pans et absorbant le surplus de matière résultant du pliage.

Le procédé comporte typiquement, en outre :
- une étape 32 de dépose d'un couvercle sur le fromage ;
- une étape 34 de pliage d'un bord libre de la coquille vers le couvercle, créant au moins un troisième pli entre la paroi latérale de la coquille et ledit bord libre de la coquille ;
- une étape 36 de scellage du bord libre de la coquille avec le couvercle.

Plus précisément, l'étape 10 d'approvisionnement de la feuille comporte :
- une sous étape 12 de déroulement d'une bobine d'un film dans lequel la feuille va être découpée ;
- éventuellement une sous-étape 14 de découpe et de collage d'une bande ou d'un film d'ouverture en polymère à la surface dudit film ;
- éventuellement une sous-étape 16 de dépose d'une étiquette dans la zone de la bobine destinée à former la feuille après découpe,
- une sous étape 18 de découpe de la feuille dans le film.

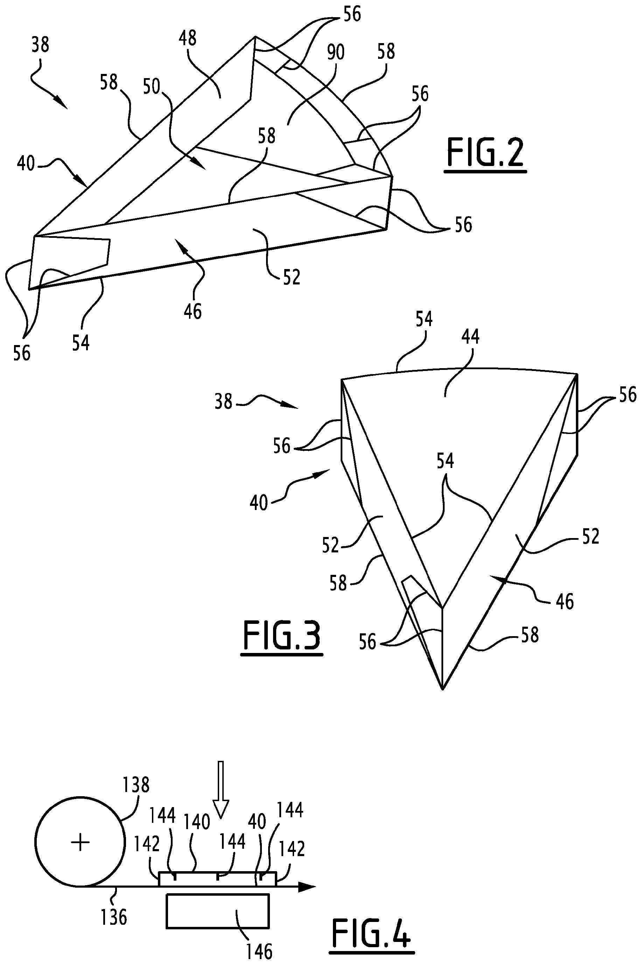

La portion de fromage 38, obtenue à l'issu du procédé représenté sur la figure 1 apparaît sur les figures 2 et 3. Elle comporte une feuille d'emballage 40 et une dose de fromage (non visible) emballée dans la feuille 40. Il ressort de ces figures que la feuille 40 est pliée en coquille, de manière à définir un fond supérieur 44, et une paroi latérale 46. Le bord libre 48 de la paroi latérale est rabattu à l'opposé du fond supérieur 44 et forme avec le couvercle un fond inférieur 50. Le couvercle 90, sur la figure 2, est partiellement masqué par le bord 48.

Dans l'exemple représenté, les fonds supérieur et inférieur sont triangulaires. La paroi latérale 46 comporte trois pans 52. Elle raccorde les fonds inférieur et supérieur l'un à l'autre.

Le fond supérieur 44 est séparé de la paroi latérale 46 par des premiers plis 54. Dans l'exemple représenté, la portion présente trois premiers plis 54. Les différents pans 52 de la paroi latérale 46 sont séparés les uns des autres des seconds plis 56. Dans l'exemple représenté, la portion présente trois seconds plis 56.

Le bord libre 48 est séparé de la paroi latérale 46 par des troisièmes plis 58. Dans l'exemple représenté, la portion présente trois seconds plis 58.

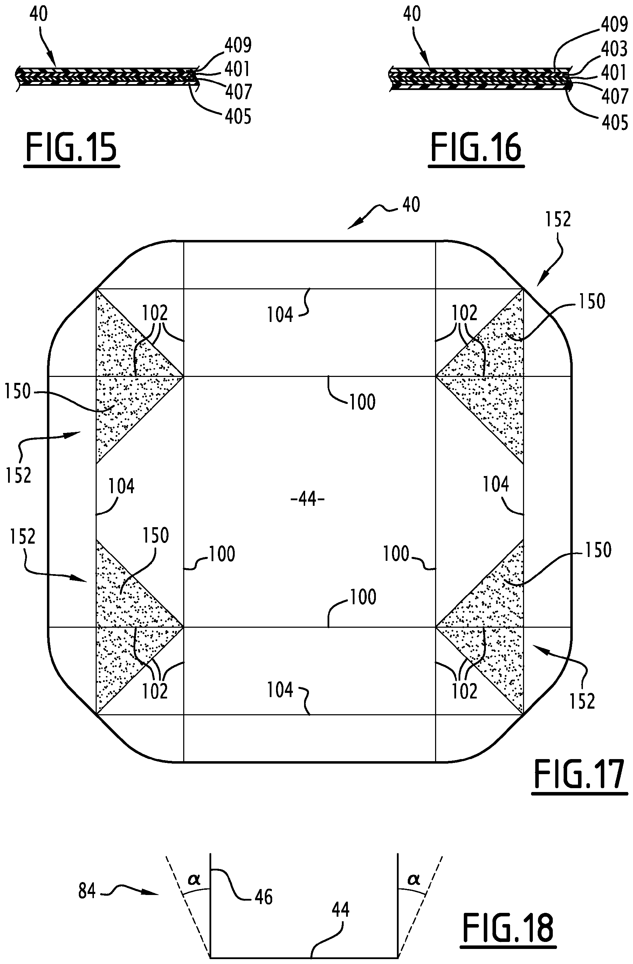

Dans l'invention, la feuille 40 comporte une couche de papier 401 (figures 15 et 16), en lieu et place de la couche d'aluminium utilisée dans la feuille de l'état de la technique. La couche de papier 401 présente une face interne tournée vers le fromage et une face externe à l'opposée du fromage. La feuille 40 comporte également :
- une couche scellante 405 basse température,
- au moins une couche étanche à l'eau 407 interposée entre la face interne de la couche de papier 401 et la couche scellante 405, et
- au moins une couche externe étanche à l'eau 409 couvrant la face externe de la couche de papier 401.

### Le matériau papier

S'agissant d'un matériau devant se substituer à l'aluminium pour portion fromagère, on choisit un papier mince, l'usage de carton n'étant pas envisageable pour cette application. On choisit donc de préférence un papier d'une épaisseur inférieure à 150µm, et préférentiellement compris entre 20 et 50µm. On choisit un papier apte au contact alimentaire, de préférence un papier avec des fibres vierges, et préférentiellement avec une structure aérée (calandrage modéré) pour avoir une meilleure aptitude au pliage.

La matière papier est très intéressante pour la substitution de l'aluminium des portions de fromage fondu, car le papier est un des rares matériaux avec l'aluminium à bien conserver les plis réalisés sur celui-ci : le papier a une bonne mémoire du pliage, permettant d'envisager une mécanisation similaire à celle utilisée pour la feuille avec une couche d'aluminium.

Le papier, par sa nature fibreuse, présente également une bonne résistance mécanique à la traction et un meilleur comportement que l'aluminium mince permettant d'envisager une réduction des fissurations sur les zones sollicitées (frottement dans la cheminée de pliage, plis, zone de frottement dans l'étui etc...)

### La couche scellante

La couche scellante 405 est adapté pour permettre un scellage de la coquille sur elle-même et/ou avec le couvercle. Ce scellage est assuré par une couche de polymères, ou par un laque ou un vernis (exemple : polyéthylène et ses dérivés, laque vinylique, laque acrylique, laque nitrocellulosique etc...). Idéalement la température de scellage est inférieure à 80°C, et préférentiellement inférieur à 70°C, ce qui permet d'assurer un scellage en s'aidant de la chaleur dégagée par le fromage. Ce revêtement est par exemple appliqué sur la face interne de la couche de papier de la coquille, et sur la face externe du couvercle (en contact avec la coquille). En variante, comme représenté sur la figure 7, le revêtement permettant le scellage est appliqué sur la face interne du couvercle. La face externe du couvercle dans ce cas est de préférence scellable sur elle-même.

Dans un exemple de réalisation, le revêtement assurant le scellage assure également l'étanchéité de la couche de papier à l'eau.

### Exemple de couches/traitements possibles :

Dans les exemples des figures 15 et 16, la couche étanche à l'eau 407 est obtenue par un traitement réalisé selon une ou plusieurs des méthodes suivantes.
- L'application sur la face interne d'une couche 405 d'une laque. Idéalement l'application est effectuée en plusieurs couches, au minimum 2, de 2 à 20µm, et plus avantageusement de 2 à 15µm et encore plus avantageusement de 2 à 10µm. On utilise par exemple des laques de nature acrylique (méthacrylate, acrylate, copolymère de ces polymères avec l'éthylène), nitro-cellulosique, vinylique (PVC, PVacétate, PVLaurate, PVDC), éventuellement additionnée d'acide fumarique, d'acide maléique, par exemple sous forme d'émulsion ou latex. En variante, la laque est appliquée sur la face externe de la couche de papier.
- L'application sur la face interne d'une couche 405 d'un vernis, par exemple de nature acrylique, méthacrylique, iso-cyanate, poly iso-cyanate, polyuréthane, époxy. En variante, le vernis est appliqué sur la face externe de la couche de papier.
- L'application sur la face interne d'un film plastique 405 de 2 à 50 µm, et plus avantageusement de 2 à 20 µm et encore plus avantageusement de 2 à 10 µm, par exemple réalisée par complexage d'un film ou enduction / extrusion directe sur le papier. Ce film pourra être de type polyoléfine tel que PE (polyéthylène), PP (polypropylène), PB-1 (poly butylène 1), COC (copolymère d'oléfines cycliques) ; de type polyester tel que PET (poly éthylène téréphtalate), PEN (poly éthylène naphtalate), PBT (Polybutylène téréphtalate), PBA (poly butylène adipate), PBS (polybutylene succinate) PVac (polyvinyl acétate), PLA (polylactiqueacide), PHA (poly hydroxy alcanoates) ; de type styrénique tel que le PS (polystyrène) et ses copolymères ; de type vinylique tel que le PVC (poly chlorure de vinyle), PVDC (chlorure de poly-vinylidène), PEF (poly éthylène furane), PA (polyamides), EVOH (ethyl vinyle alcool), PVOH (poly vinyle alcool). Cette couche plastique peut recevoir en traitement du type métallisation, enduction, plasma SiOx.

La couche externe étanche à l'eau 409 est obtenue par un ou plusieurs des traitements décrits ci-dessus pour la couche 407.

Par ailleurs, l'étanchéité du côté interne de la couche de papier 401 peut être renforcée par un traitement réalisé selon une ou plusieurs des méthodes suivantes.
- La réalisation d'un traitement de surface de la face interne de la couche de papier 401. Ce traitement peut prendre la forme de greffage chimique tel que le greffage d'acide gras (par exemple chlorure d'acyle ou acide laurique). Ce traitement de surface peut également être un traitement chimique, par exemple à l'acide sulfurique pour obtenir un papier dit sulfurisé, ou par un produit à base de silicone, ou par un fluorure. Enfin, le traitement du papier peut être du type mécanique tel que le calandrage ou le gaufrage. La face externe de la couche de papier peut en variante subir aussi le même traitement, pour protéger la portion de fromage d'un environnement extérieur potentiellement néfaste (réfrigérateur très humide).
- La réalisation d'un traitement d'étanchéification dans la masse de la couche de papier 405. Un produit à base de silicone, et/ou un fluorure est dispersé dans le papier dans une proportion massique par rapport au papier choisie pour rendre la couche de papier étanche à l'eau.

Les différentes méthodes ci-dessus peuvent être employées séparément ou en combinaison.

### Couche de support :

Dans l'exemple représenté sur la figure 16, la feuille 40 comporte en outre une couche de support 403, interposée entre la face externe de la couche de papier 401 et la couche externe étanche à l'eau 409. La couche de support 403 est par exemple une couche de matière plastique, notamment de polyamide, de polyéthylène, d'OPP, de PET etc. appliquée par extrusion ou par lamination d'un film. Elle confère à la feuille une résistance mécanique adaptée, notamment vis-à-vis du glissement contre les éléments mécaniques de la machine et lors du pliage. Cette couche permet également de protéger la feuille de papier du contact direct avec les éléments mécanique pouvant détériorer son aspect de surface, notamment en la salissant. Cette couche pourra également être utilisée pour ajouter des caractéristiques permettant la conservation de la portion de fromage sur une longue durée, ainsi on pourra inclure dans cette couche un matériau barrière gaz, par exemple de l'EVOH, pour adapter la perméabilité aux contraintes de conservation du produit conditionné.

Selon une variante non représentée, la couche externe étanche à l'eau et la couche de support sont une seule et même couche, réalisée en un même matériau. Ce matériau est dans ce cas une couche de matière plastique, notamment de polyamide, de polyéthylène, d'OPP, de PET etc. appliquée par extrusion ou par lamination d'un film.

Selon une autre variante non représentée, la feuille d'emballage comporte une couche barrière supplémentaire entre la face interne de la couche de papier et la couche barrière à l'eau. Cette couche barrière supplémentaire permet la conservation de la portion de fromage sur une longue durée, et peut comporter un matériau barrière gaz, par exemple de l'EVOH, pour adapter la perméabilité aux contraintes de conservation du produit conditionné.

Les différents matériaux constituant la feuille peuvent être additionnés d'agent de charge (sous forme de poudres, fibres), de pigments ou colorants pour éventuellement colorer la structure, de plastifiant pour modifier les propriétés des polymères utilisés et notamment donner de la souplesse, d'agent de glissement pour adapter aux contraintes de passage machine.

### Proportion papier / couches plastiques

Les épaisseurs des polymères, laques ou vernis ajoutés sur le papier, sont suffisamment faibles pour ne pas dégrader la mémoire au pliage du papier. Idéalement la proportion de papier (en épaisseur) dans la feuille sera supérieur à 30%, préférentiellement supérieure à 50%. Les polymères incorporés dans la feuille sont pour tout ou partie d'origine renouvelable, ce qui permet dans ce cas de proposer une alternative majoritairement d'origine renouvelable, à la feuille d'emballage de l'état de la technique.

La feuille est donc typiquement en un matériau multicouche, la combinaison des matériaux étant choisie pour former une barrière à l'humidité importante et, en fonction du fromage conditionné, des barrières adaptées à la lumière, aux gaz et aux arômes.

### Système d'ouverture

Afin de procéder à l'ouverture de la portion, un système d'ouverture est prévu. Il comporte typiquement, comme sur les portions réalisées avec une feuille d'aluminium, au moins une bande fine d'un matériau suffisamment résistant, contrecollé sur la feuille à l'intérieur de la portion. La bande permet de forcer la déchirure de la feuille ou de la zone de scellage en regard de la bande. Classiquement, ces bandes peuvent être réalisées avec un matériau polymère type PET ou PP, mais également avec d'autres types de polymères présentés en film et suffisamment résistant. On peut également utiliser des bandes en matériau papier.

La bande de matériau résistant pouvant entrainer la déchirure de la feuille peut aussi être envisagée incorporée directement dans l'épaisseur de la feuille multicouche lors de sa fabrication, entre les couches par exemple.

Ce type de système d'ouverture, classiquement utilisé sur les portions aluminiums est communément nommé Tircel (nom déposé par Rexor) ou Tear Stripe.

Dans les cas de solutions d'ouverture nécessitant un affaiblissement de la structure, on veille à ne pas détériorer les couches de protection du papier, et on privilégie notamment les méthodes permettant de réaliser cette opération avant l'application des couches protectrices.

Enfin, il est également possible, avec une géométrie différente de celle utilisée pour les portions aluminiums, d'utiliser un matériau associé à une géométrie permettant une ouverture par pelabilité.

Dans tous les cas, la zone de préhension pour l'ouverture pourra aussi bien être constituée d'une partie du film formant la portion au moyen d'un pliage spécifique que d'une pièce rapportée (débord de tircel, ajout d'étiquettes, scellage d'une patte de préhension etc...).

### Couvercle

Le couvercle 90 a typiquement la même structure et est constitué des mêmes matériaux que la feuille 40, avec une seule différence : la couche scellante couvre la couche externe étanche à l'eau, et non la couche étanche à l'eau.

### Reprise d'humidité dans le couvercle :

Une vigilance particulière est apportée à la possibilité de reprise d'humidité par la tranche sur le couvercle. Le papier est ainsi hydrophobé dans la masse par un des procédés cités précédemment. Un autre mode de résolution de ce problème est de réaliser un assemblage coquille couvercle évitant que la tranche du matériau au niveau de la coquille et/ou du couvercle ne soit exposée à un contact direct avec le fromage. L'agencement représenté sur la figure 7 permet de résoudre ce problème. Le couvercle est plus grand que dans les portions aluminium traditionnelles, permettant de le replier sur ses bords et de le faire remonter le long de la coquille. Après fermeture de la portion, il n'y a pas de contact entre la tranche du couvercle et le produit.

### Exemples de structures pour la feuille d'emballage et le couvercle

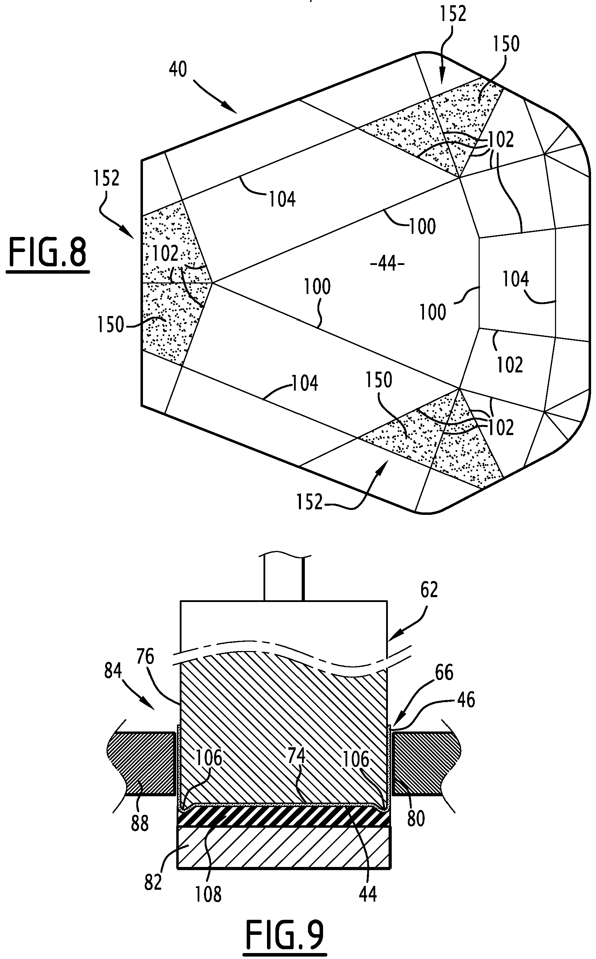

Les couches successives, pour cinq exemples de feuilles, sont énumérées ci-dessous, à partir du fromage vers l'extérieur de la portion.
Exemple 1 : Laque Vinylique 2-6µm / Film PE extrudé 6-12µm / Papier couché 30-40g/m² / impression / Vernis acrylique 2-6µm
Exemple 2 : Laque Nitro cellulosique 2-6µm / Film PE extrudé 6-12µm / Papier couché 30-40g/m² / impression / Vernis acrylique 2-6µm
Exemple 3 : Laque Vinylique 2-6µm / Film PE extrudé 6-12µm / Papier couché 30-40g/m² / impression / Vernis acrylique 2-6µm / Adhésif à froid repéré sur les figures 8 et 17 par la référence 150.
Exemple 4 : Laque Vinylique 2-6µm / Film PET laminé collé sur le papier 6-12µm / Papier couché 30-40g/m² / impression / Vernis acrylique 2-6µm
Exemple 5 : Extrusion polymère scellant basse température (dérivé PE) / Film PE extrudé 6-12µm / Papier couché 30-40g/m² / impression / Vernis acrylique 2-6µm

Les couches successives, pour cinq exemples de couvercle, sont énumérées ci-dessous, à partir du fromage vers l'extérieur de la portion. Les exemples ci-dessous sont adaptés aux cas où la tranche du couvercle présente du papier à nu en contact avec le fromage:
Exemple 1 : Extrusion PE 6-12µm / Papier sufurisé 20-40g/m² / Laque vynilique 4-8µm
Exemple 2 : Extrusion PE 6-12µm / Papier sufurisé 20-40g/m² / Laque vynilique 2-6µm / Laque vynilique 2-6µm
Exemple 3 : Lamination d'un film PET 6-12µm / Papier sufurisé 20-40g/m² / Laque vynilique 4-8µm
Exemple 4 : Extrusion PE 6-12µm / Papier sufurisé 20-40g/m² / Laque vynilique 4-8µm
Exemple 5 : Extrusion PE 6-12µm / Papier traité dans la masse avec imperméabilisant fluroé 20-40g/m² / Laque vynilique 4-8µm

Les couches successives, pour trois autres exemples de couvercle, sont énumérées ci-dessous, à partir du fromage vers l'extérieur de la portion. Les exemples ci-dessous sont adaptés aux cas où le couvercle présente la géométrie représentée fig 7 (couvercle remontant sur les bords de la coquille, pas de papier en contact direct avec le fromage), et où un traitement du papier dans la masse n'est pas nécessaire.
Exemple 1 : Extrusion PE 6-12µm / Papier couché 20-40g/m² / Laque vynilique 4-8µm
Exemple 2 : Extrusion PE 6-12µm / Papier couché 20-40g/m² / Laque vynilique 2-6µm / Laque vynilique 2-6µm
Exemple 3 : Lamination d'un film PET 6-12µm / Papier couché 20-40g/m² / Laque vynilique 4-8µm

### Procédé de fabrication

### Rainage avec découpe

Les sous-étapes 12 et 18 sont représentées sur la figure 4. Le film 136 est déroulé de la bobine 138. Un couteau 140, portant des lames 142, découpe la feuille 40 dans le film 136. Le couteau 140 porte en outre des filets rainants 144. Quand le couteau 140 est abaissé sans déformer le film, les filants rainants 144 pincent la feuille 40 contre un support fixe 146. Le dessin des filets rainants 144 correspond à celui des lignes de pliage de la feuille 40.

L'étape de pliage 20 est effectuée comme représenté schématiquement sur la figure 5.

### Réalisation des premier et second plis

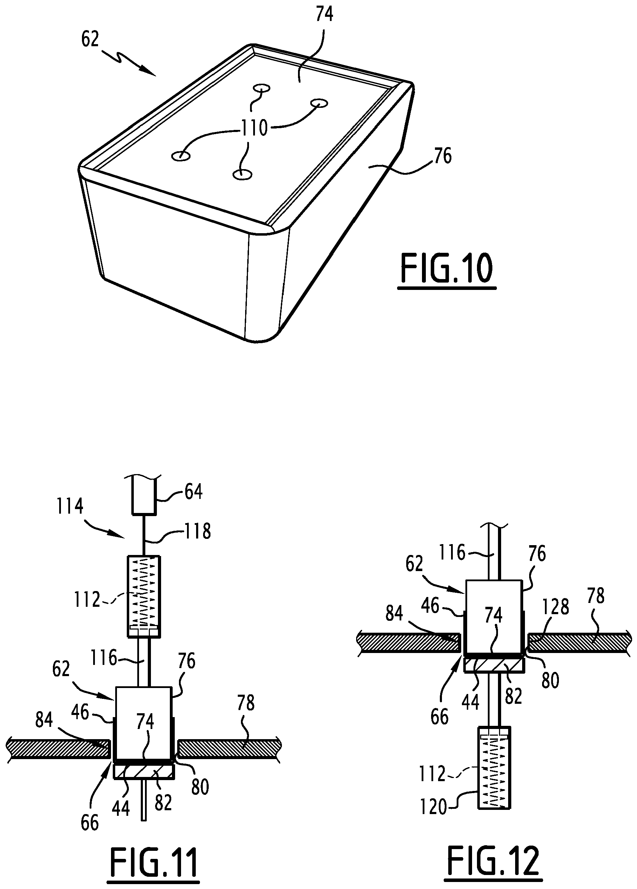

L'étape 20 met en oeuvre une cheminée de pliage 60, un piston 62, un actionneur 64 agencé pour déplacer le piston 62 à travers la cheminée 60, et une alvéole 66 de réception de la coquille creuse obtenue à l'issu de l'étape de pliage. La cheminée 60 comporte une paroi périphérique délimitant une ouverture amont 68 et une ouverture aval 70. Elle est constituée d'une pluralité de lames partiellement visibles sur la figure 12. Les lames 72 sont agencées pour créer les premier et second plis 54 et 56 quand la feuille 40 est déplacée à travers la cheminée, de l'ouverture amont 68 vers l'ouverture aval 70 par le piston 62. Une telle cheminée, notamment l'agencement des lames 72 permettant d'obtenir les plis 54 et 56, est connue en soi et ne sera pas décrite en détail ici.

Le piston 62 comporte une face frontale 74 destinée à venir au contact de la feuille 40 et à pousser celle-ci à travers la cheminée. La face frontale 74 présente sensiblement la forme du fond 44 de la coquille. Le piston 62 comporte encore une surface latérale 76, contre laquelle la paroi latérale 46 de la coquille est rabattue lors du passage de la feuille 40 à travers la cheminée. La face frontale 74 est, dans l'exemple représenté, sensiblement perpendiculaire à la direction D

L'actionneur 64 est ici un vérin linéaire, déplaçant le piston 62 selon une direction D matérialisée sur la figure 5, correspondant à l'axe central de la cheminée 60.

L'alvéole 66 est ménagée dans un carrousel 78, qui comporte un grand nombre d'alvéoles du même type que celle représentée sur la figure 5. Le carrousel 78 est agencé pour déplacer l'alvéole 66 de poste en poste, et notamment d'un premier poste de réception de la coquille creuse obtenue à l'issu de l'étape de pliage de la feuille, à un second poste auquel est effectuée l'étape 30 de remplissage de la coquille ; puis un troisième poste auquel est effectuée l'étape 32 de dépose du couvercle, un quatrième poste auquel est effectuée l'étape 34 de pliage du bord libre vers le couvercle, et un cinquième poste auquel est effectuée l'étape 36 de scellage du bord libre sur le couvercle.

L'alvéole 66 est placée sous l'orifice aval 70 de la cheminée. Elle est ouverte vers cet orifice. Elle est délimitée par une paroi périphérique 80 et par un tampon 82 constituant le fond de l'alvéole 66.

L'étape de pliage 20 est effectuée en plaçant la feuille 40 en regard de l'orifice amont 68 de la cheminée 60, dans une orientation sensiblement perpendiculaire à la direction D. Le piston 62 vient en appui par l'intermédiaire de la face frontale 74 sur la zone de la feuille 40 destinée à former le fond 44. Le vérin 64 pousse le piston 62 et la feuille 40 à travers la cheminée 60. Les lames 72 sont agencées de manière à plier la feuille 40 au fur et à mesure du déplacement du piston 62 le long de la cheminée. Les premier et second plis 54 et 56 sont ainsi créés, la feuille adoptant une forme de coquille creuse, visible notamment sur la figure 5.

Le piston 62, quand la feuille sort de la cheminée 60, pousse celle-ci jusque dans l'alvéole 66.

Comme illustré sur la figure 18, la paroi latérale 46, après l'étape 20 de pliage de la feuille 40 et avant coulée du fromage dans la coquille 84, forme avec le fond 44 un angle de sensiblement 90°, avec une relaxation α possible vers l'extérieur de 15° maximum, de préférence inférieur à 5°, encore de préférence inférieur à 1°. En effet, après que la coquille 84 soit sortie de la cheminée 60, l'angle formé entre la paroi latérale et le fond tend à s'ouvrir légèrement, ce phénomène étant appelé relaxation. Du fait que la feuille 40 présente un affaiblissement le long des lignes destinées à former les premiers plis 54 (comme décrit plus loin), et/ou que les premiers plis 54 ont subi un écrasement, la relaxation est n'excède pas 15°. L'angle entre la paroi latérale et le fond n'augmente pas de plus de 15°.

### Remplissage

La figure 6 illustre l'étape de remplissage de la coquille 84 par le fromage. La coquille 84 repose par l'intermédiaire du fond 44 sur le tampon 82, la paroi latérale 46 étant située contre ou à proximité immédiate de la paroi 80 de l'alvéole. Le carrousel 78 place la coquille 84 sous un orifice 86 par lequel s'écoule le fromage 88.

Dans l'exemple représenté, le fromage 88 est du fromage fondu, coulant à chaud à l'intérieur de la coquille 84.

### Pose du couvercle et réalisation des troisièmes plis

L'étape 34 de pliage du bord libre de la coquille vers le couvercle est illustrée sur la figure 7. La coquille remplie de fromage a été déplacée par le carrousel 78 jusqu'au poste correspondant. La coquille 84 se trouve toujours dans l'alvéole 66, le carrousel 78 et l'alvéole 66 n'étant pas représentés sur la figure 7.

Le couvercle 90 en revanche est représenté, posé sur la surface libre 91 du fromage. Le couvercle 90 possède initialement la forme représentée sur la figure 7. Son bord 92 est dressé autour de la partie centrale 94, et s'étend en regard du bord libre 48 de la coquille. Des doigts intérieurs 96 maintiennent le couvercle 90 plaqué contre le fromage. Plusieurs doigts intérieurs 96 sont répartis sur la périphérie du couvercle 90. Les doigts 96 présentent chacun une extrémité coudée qui appuie le bord dressé du couvercle 90 contre la paroi latérale 46 de la coquille. D'autres doigts extérieurs 98 sont répartis autour de la coquille 84, au moins en regard des doigts intérieurs 96. Les doigts extérieurs 98 viennent appuyer radialement contre le bord libre 48 de la coquille. Ils se déplacent sensiblement parallèlement au couvercle, c'est-à-dire sensiblement parallèlement à la surface libre 91 du fromage, de l'extérieur vers l'intérieur de la coquille. Sous l'effet de cette contrainte, le bord libre 48 et le bord dressé 92 se rabattent vers la partie centrale 94 du couvercle. Les doigts intérieurs 96 sont ensuite dégagés par un mouvement radial vers le centre du couvercle. Les troisièmes plis 58 sont ainsi créés, sensiblement au niveau de la surface libre du fromage ou légèrement au-dessus de celle-ci.

### Marquage des plis

Plusieurs dispositions sont mises en oeuvre dans le procédé décrit ci-dessus, pour faire en sorte que les premier, second et troisième plis 54, 56 et 58 soient bien marqués, et que la feuille 40 n'ait pas tendance à se déplier après mise en forme. Ces dispositions sont utilisées individuellement, ou en combinaison.

### Affaiblissement

Comme illustré sur les figures 8 et 17, la feuille 40 peut comporter des affaiblissements le long de lignes 100, 102, 104 destinées à former les premier, second et troisième plis. La position des affaiblissements dépend de la forme de la feuille et de la forme de la portion de fromage. La feuille 40 représentée sur la figure 8 est destinée à la fabrication d'une portion à fond triangulaire, telle que celle représentée sur les figures 2 et 3. Pour une portion ayant une forme de parallélépipède rectangle, la feuille 40 est rectangulaire, comme représenté sur la figure 17.

Dans l'exemple représenté, les affaiblissements 100, 102, 104 sont réalisés par mise en pression de la feuille 40 entre les filets rainants 144 et un support 146 le long des lignes de pliage, comme expliqué plus haut, relativement à la figure 4.

### Premiers plis

Dans la variante illustrée sur la figure 9, l'affaiblissement 100 est créé le long des lignes 100 destinées à former les premiers plis 54 en prévoyant un filet rainant 106 autour de la face frontale 74 du piston. Quand le piston 62 pousse la coquille 84 dans l'alvéole 66, le filet rainant 106 vient presser les bords du fond 44 contre le tampon 82.

Dans ce cas, le tampon 82 comporte de préférence une surface en caoutchouc 108, dans laquelle vient s'enfoncer le filet rainant 106.

Dans une autre variante non représentée, le tampon 82 comporte une rainure en creux dans laquelle est reçu le filet rainant 106.

Comme représenté sur la figure 10, un autre moyen pour obtenir des premiers plis 54 bien marqués est de prévoir une pluralité de trous d'aspiration 110 sur la face frontale 74 du piston 62. On a représenté sur la figure 10 quatre trous d'aspiration, mais le nombre de trous 110 peut être différent, moins élevé ou plus élevé en fonction des besoins. Les trous 110 sont raccordés fluidiquement à un organe d'aspiration tel qu'une pompe à vide (non représentée). A l'entrée de la cheminée 60, la feuille 40, et plus précisément le fond 44 de la feuille est maintenu plaqué contre la face frontale 74 du piston par aspiration à travers des trous 110, ce qui se traduit par des plis de meilleure qualité. Une autre solution pour marquer les premiers plis est de prévoir que le piston 62 presse fortement le fond 44 de la coquille contre le tampon 82. Ceci est réalisé en réglant la course du piston 62.

Sur la figure 10, la face frontale 74 est rectangulaire. Un tel piston est adapté pour la fabrication de portions en forme de parallélépipédiques rectangles. Pour des portions à fonds triangulaires, telles que celle représentée sur les figures 2 et 3, la face frontale 74 est triangulaire.

Dans la variante de réalisation illustrée sur la figure 11, un ressort 112 est interposé entre le piston 62 et le vérin 64, de manière à amortir l'écrasement des premiers plis. Plus précisément, le piston 62 est raccordé au vérin 64 par l'intermédiaire d'une tige d'actionnement 114, comportant un tronçon 116 solidaire du piston 62 et un tronçon 118 déplacé par le vérin 64. Le ressort 112 est interposé entre les parties 116 et 118. Ainsi, comme expliqué plus haut, le piston 62 est déplacé par l'intermédiaire du vérin 64, jusqu'à venir en butée contre le tampon 82. Si la course du vérin 64 est mal réglée, le piston 62 vient en butée avant que le vérin 64 soit à sa fin de course. La surcourse est absorbée par compression du ressort 112. Ceci a pour effet de fortement comprimer la feuille 40 contre le tampon 82, ce qui est favorable pour le marquage des premiers plis.

Dans la variante de réalisation de la figure 12, le ressort 112 n'est pas interposé entre le piston 62 et le vérin 64 mais entre le tampon 82 et un support fixe 120. Dans ce cas, le tampon 82 a au moins un degré de liberté par rapport à la paroi 80, selon l'axe de compression du ressort 112. L'axe de compression du ressort 112 correspond a la direction de déplacement du vérin. SI le piston arrive au contact du tampon 82 avant la fin de course du vérin, la surcourse est absorbée par enfoncement du tampon 82, à l'encontre de la force de rappel du ressort 112.

### Deuxièmes plis

De manière à permettre un bon marquage des seconds plis 56, il est prévu que le jeu entre les lames 72 de la cheminée 60 soit réduit, de façon à pincer les seconds plis 56 formés lors du passage de la feuille 40 à travers la cheminée 60. De même, le jeu entre ces lames 72 et la paroi latérale 76 du piston peut être réduit, pour marquer ces seconds plis 56.

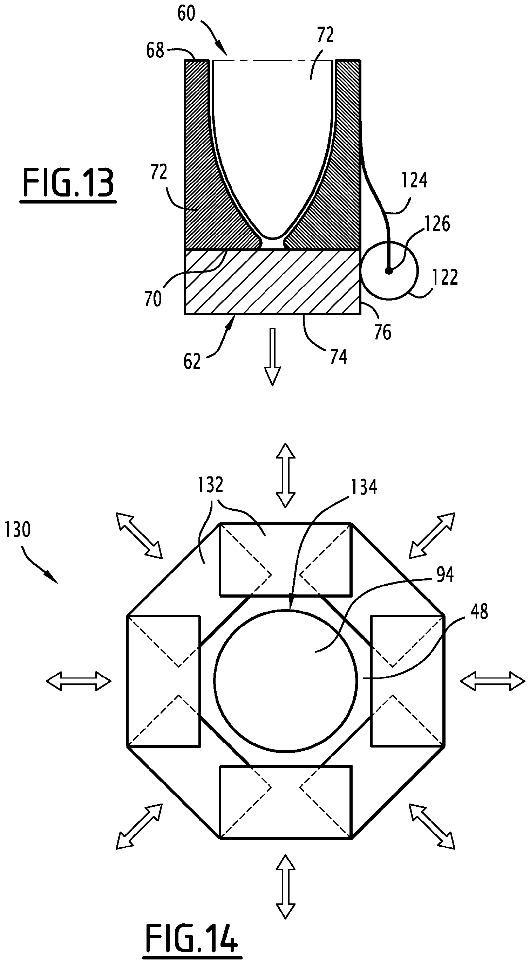

Dans la variante représentée sur la figure 13, la cheminée 60 est équipée de plusieurs pièces de friction 122, chacune liée à la cheminée 60 par un organe élastique 124 sollicitant la pièce de friction 122 contre le piston 62 quand celui-ci traverse la cheminée 60. Dans l'exemple représenté, chaque pièce de friction 122 est un galet, lié par une liaison pivot 126 à l'organe élastique 124. Le galet 122 est placé légèrement sous l'orifice aval 70 de la cheminée. L'organe élastique 124 est par exemple un ressort lame, dont une extrémité est rigidement fixée sur la paroi périphérique de la cheminée 60, et dont l'extrémité opposée porte la liaison pivot 126. Le ressort 124 rappelle le galet 122 vers une position de repos dans laquelle une partie du bord périphérique du galet est située au droit de l'orifice aval 70. En d'autres termes, si on considère la projection du galet 122 parallèlement à la direction D dans le plan de l'orifice aval 70, une partie du galet se trouve à l'intérieur de l'orifice aval 70.

L'axe de rotation de la liaison pivot 126 est perpendiculaire à la direction D.

Quand le piston 62 portant la coquille sort de l'orifice aval 70, il déplace chaque galet 122 vers l'extérieur de la cheminée à l'encontre de la force de rappel du ressort 124. Les galets 122 sont disposés, circonférentiellement autour de la cheminée 60, à des angles correspondant aux positions des seconds plis 56. Les galets 122 roulent sur les seconds plis au fur et à mesure que le piston descend vers l'alvéole 66. Ceci provoque l'écrasement des seconds plis.

### Trous à vide dans alvéole

Dans une variante de réalisation illustrée sur la figure 5, la paroi 80 de l'alvéole comporte des orifices 128 d'aspiration, raccordés fluidiquement à un organe d'aspiration du type pompe à vide. Les orifices 128 sont prévus pour tirer au vide une fois la coquille en position dans l'alvéole 66, empêchant les seconds plis de se déplier après que la coquille a quitté la cheminée 60. Ceci contribue à une bonne formation des seconds plis.

### Troisièmes plis

Pour favoriser le marquage des troisièmes plis, il est prévu de réduire le jeu entre le doigt intérieur 96 et le doigt extérieur 98, ce jeu étant pris suivant une direction perpendiculaire à la surface libre du fromage.

Dans une variante de réalisation illustrée sur la figure 14, un diaphragme est disposé au-dessus de l'alvéole 66, au poste de scellage. Le diaphragme 130 est prévu pour maintenir le bord libre 48 de la coquille en position entre l'étape de pliage vers le couvercle et l'étape de scellage. En effet, à l'issue de l'étape de pliage du bord libre de la coquille, ce bord libre est incliné vers le centre de la coquille, et forme un angle réduit avec la partie centrale 94 du couvercle. Par exemple, cet angle est de l'ordre de 30°. Le diaphragme 130 permet de maintenir le bord libre 48 dans cette position, jusqu'à l'opération de scellage. Le diaphragme 130, comme illustré sur la figure 14, comporte une pluralité de plaque 132, chacune déplaçable radialement entre une position relativement plus éloignée du centre du couvercle, et une position relativement plus rapprochée du centre du couvercle. Quand les plaques 132 sont en position rapprochées, elles forment une couronne délimitant un vide central 134. La couronne est située immédiatement au dessus du bord libre rabattu 48, et empêche celui-ci de se relever par dépliage des troisièmes plis 58.

Le diaphragme de la figure 14 est adapté pour une portion de fromage de forme cylindrique ou octogonale. Il peut être agencé de manière à s'adapter à une portion de fromage de géométrie triangulaire, rectangulaire, carrée, ou à toute autre géométrie.

A l'étape de scellage, un organe de chauffage est approché du bord libre 48, par le dessus. Les plaques 132 sont alors déplacées vers leur position escamotée pour laisser descendre l'organe de chauffage, qui peut happer sans difficulté le bord libre 48 et presser celui-ci contre la partie centrale 94 du couvercle.

### Adhésif externe de la portion

Selon une variante de réalisation de l'invention, la feuille 40 comporte un adhésif 150 sur des zones repérées 152 destinées à former les seconds plis 56. L'adhésif 150 est représenté en grisé sur les figures 8 et 17.
L'adhésif 150 est placé sur la face externe de la feuille 40 pour éviter tout contact avec le fromage. L'adhésif 150 est un produit collant réactivable mécaniquement par pression sur la feuille.

L'adhésif 150 est déposé à l'intérieur des seconds plis 56 pour maintenir ceux-ci plaqué à la coquille 84. Cela limite de risque d'ouverture de la portion par effet ressort de la feuille.

## Revendications

1. Portion de fromage frais, frais fondu ou frais thermisé (38) comprenant :
- une feuille d'emballage (40) ayant un grammage compris entre 20 à 50 g/m2 pliée en forme de coquille creuse (84), avec un fond (44) et une paroi latérale (46) séparée du fond (44) par un premier pli (54);
- une dose de fromage (88) emballée dans la feuille (40), le fromage (88) étant coulé à chaud entre 70°C et 85°C à l'état liquide ou visqueux dans la coquille (84);
- un couvercle (90), scellé de manière étanche à la coquille (84), la portion de fromage (38) ne comprenant pas de volume mort;
**caractérisée en ce que** la feuille (40) ne comporte pas de couche d'aluminium, la feuille (40) comportant au moins une couche de papier (401) ayant une face interne tournée vers le fromage (88) et une face externe opposée au fromage (88), une couche scellante (405) basse température, au moins une couche étanche à l'eau (407) interposée entre la face interne de la couche de papier (401) et la couche scellante (405), et au moins une couche externe étanche à l'eau (409) couvrant la face externe de la couche de papier (401), la couche scellante (405) étant une couche de polymère ou une couche de laque ou une couche de vernis et ayant une température de fusion inférieure à 90°C, la couche scellante (405) étant appliquée sur la face externe ou sur la face interne du couvercle (90), la couche de papier (401) ayant une épaisseur comprise entre 20 et 150 µm.

2. Portion selon la revendication 1, **caractérisée en ce que** la feuille (40) présente une première épaisseur, la couche de papier (401) présentant une seconde épaisseur supérieure à 30% de la première épaisseur, de préférence supérieure à 50% de la première épaisseur.

3. Portion selon l'une quelconque des revendications précédentes, **caractérisée en ce que** la face interne de la couche de papier (401) porte un greffage chimique d'acide gras.

4. Portion selon l'une quelconque des revendications précédentes, **caractérisée en ce que** la face interne de la couche de papier (401) a subi un traitement de surface d'étanchéification chimique, par exemple à l'acide sulfurique, par un produit à base de silicone ou par un fluorure.

5. Portion selon l'une quelconque des revendications précédentes, **caractérisée en ce que** la couche de papier (401) a subi un traitement d'étanchéification dans la masse, et contient un produit à base de silicone, et/ou un fluorure dispersé dans le papier dans une proportion massique par rapport au papier choisie pour rendre la couche de papier (401) étanche à l'eau.

6. Portion selon l'une quelconque des revendications précédentes, **caractérisée en ce que** la couche étanche à l'eau (407) et/ou la couche externe étanche à l'eau (409) comprend au moins l'un d'une couche de laque étanche à l'eau, d'un vernis étanche à l'eau, d'une couche de matière plastique.

7. Procédé de fabrication d'une portion (38) de fromage selon l'une quelconque des revendications précédentes, le procédé comprenant au moins:
- une étape d'approvisionnement de la feuille d'emballage (40);
- une étape de pliage de la feuille (40), au cours de laquelle au moins un premier pli (54) est formé dans la feuille (40), celle-ci adoptant la forme d'une coquille creuse (84) avec un fond (44) et une paroi latérale (46) séparé du fond par le premier pli (54) ;
- une étape de remplissage de la coquille (84), en coulant le fromage (88) dans ladite coquille (84), de préférence à une température comprise entre 70°C et 85°C ;
le procédé comprenant en outre une étape d'affaiblissement de la feuille (40) le long d'au moins une ligne (100) destinée à former le premier pli (54), et/ou un écrasement d'au moins le premier pli (54), l'affaiblissement et/ou l'écrasement étant réalisés de préférence sans chauffage de la feuille (40).

8. Procédé selon la revendication 7, **caractérisé en ce qu'**au cours de l'étape de pliage au moins un second pli (56) est formé dans la feuille (40), le second pli (56) divisant la paroi latérale (46) en plusieurs pans (52), le procédé comprenant une étape d'affaiblissement de la feuille (40) le long d'au moins une ligne (102) destinée à former au moins le second pli (56), et/ou un écrasement d'au moins un le second pli (56), l'affaiblissement et/ou l'écrasement étant réalisés sans chauffage de la feuille (40).

9. Procédé selon la revendication 8, **caractérisé en ce que** l'étape de pliage de la feuille (40) est réalisée en poussant la feuille (40) à l'aide d'un piston (62) à travers une cheminée (60) de pliage, le piston (62) ayant une face frontale (74) et une surface latérale (76), la face frontale (74) étant au contact de la feuille (40) et ayant une forme identique à celle du fond (44), la cheminée (60) ayant une pluralité de lames (72) agencées pour réaliser les premier et second plis (54, 56) et rabattre la paroi latérale (60) de la coquille (82) contre la surface latérale (76) du piston (62).

10. Procédé selon la revendication 9, **caractérisé en ce que** l'écrasement du premier pli (54) est réalisé en sollicitant la feuille (40) à l'aide du piston (62) à l'intérieur d'une alvéole (66).

11. Procédé selon la revendication 10, **caractérisé en ce que** l'écrasement du premier pli (54) est amorti par un ressort (112) interposé entre le piston (62) et un actionneur (64) ou entre un tampon (82) constituant le fond de l'alvéole (66) et un support fixe (120).

12. Procédé selon l'une quelconque des revendications 9 à 11, **caractérisé en ce que** le fond (44) de la coquille (84) est maintenu plaqué contre la face frontale (74) du piston (62) par tirage au vide à travers ladite face frontale (74).

13. Procédé selon l'une quelconque des revendications 9 à 12, **caractérisé en ce que** l'écrasement du second pli (56) est réalisé par pincement entre des lames (72) de la cheminée (60) et/ou par pincement entre les lames (72) de la cheminée (60) et le piston (62), et/ou par une pièce de friction (122) liée à la cheminée (60) par un organe élastique (124) sollicitant ladite pièce de friction (122) contre le piston (62), la pièce de friction (122) étant par exemple un galet.

14. Procédé selon l'une quelconque des revendications 7 à 13, **caractérisé en ce que** le procédé comprend :
- une étape de dépose d'un couvercle (90) sur le fromage (88) ;
- une étape de pliage d'un bord libre (48) de la coquille (84) vers le couvercle (96), créant au moins un troisième pli (58) entre la paroi latérale (46) de la coquille (84) et ledit bord libre (48) de la coquille (84) ;
le procédé comprenant une étape d'affaiblissement de la feuille (48) le long d'au moins une ligne (104) destinée à former au moins le troisième pli (58), et/ou un écrasement d'au moins le troisième pli (58), l'affaiblissement et/ou l'écrasement étant réalisés sans chauffage.

## Patentansprüche

1. Portion (38) aus Frischkäse, Frischschmelzkäse oder thermisiertem Frischkäse, Folgendes umfassend:
- eine Verpackungsfolie (40) mit einem Flächengewicht von 20 bis 50 g/m², die in Form einer Hohlschale (84) mit einem Boden (44) und einer vom Boden (44) durch eine erste Falte (54) getrennten Seitenwand (46) gefaltet ist;
- eine in der Folie (40) verpackte Menge Käse (88), wobei der Käse (88) warm zwischen 70°C und 85°C im flüssigen oder viskosen Zustand in die Schale (84) gegossen ist;
- einen Deckel (90), der dicht auf die Schale (84) aufgesiegelt ist, wobei die Käseportion (38) kein Totvolumen umfasst;
**dadurch gekennzeichnet, dass** die Folie (40) keine Aluminiumschicht umfasst, wobei die Folie (40) mindestens eine Papierschicht (401), die eine zum Käse (88) gewandte Innenseite und eine vom Käse (88) abgewandte Außenseite hat, eine Niedrigtemperaturversiegelungsschicht (405), mindestens eine wasserdichte Schicht (407), die zwischen der Innenseite der Papierschicht (401) und der Versiegelungsschicht (405) eingesetzt ist, und mindestens eine wasserdichte Außenschicht (409) umfasst, welche die Außenseite der Papierschicht (401) abdeckt, wobei die Versiegelungsschicht (405) eine Polymerschicht oder eine Lackschicht oder eine Lackierungsschicht ist und eine Schmelztemperatur von unter 90°C hat, wobei die Versiegelungsschicht (405) auf die Außenseite oder auf die Innenseite des Deckels (90) aufgebracht ist, wobei die Papierschicht (401) eine Dicke zwischen 20 und 150 µm hat.

2. Portion nach Anspruch 1, **dadurch gekennzeichnet, dass** die Folie (40) eine erste Dicke aufweist, wobei die Papierschicht (401) eine zweite Dicke aufweist, die größer als 30% der ersten Dicke ist, vorzugsweise größer als 50% der ersten Dicke ist.

3. Portion nach einem der vorhergehenden Ansprüche, **dadurch gekennzeichnet, dass** die Innenseite der Papierschicht (401) einen chemischen Belag aus Fettsäure trägt.

4. Portion nach einem der vorhergehenden Ansprüche, **dadurch gekennzeichnet, dass** die Innenseite der Papierschicht (401) eine Oberflächenbehandlung zur chemischen Abdichtung, zum Beispiel mit Schwefelsäure, durch ein Produkt auf Silikonbasis oder ein Fluorid erfahren hat.

5. Portion nach einem der vorhergehenden Ansprüche, **dadurch gekennzeichnet, dass** die Papierschicht (401) eine Abdichtungsbehandlung in der Masse erfahren hat und ein Produkt auf Silikonbasis und/oder ein Fluorid enthält, das in dem Papier in einem Massenanteil in Bezug auf das Papier verteilt ist, der so ausgewählt ist, dass die Papierschicht (401) wasserdicht wird.

6. Portion nach einem der vorhergehenden Ansprüche, **dadurch gekennzeichnet, dass** die wasserdichte Schicht (407) und/oder die wasserdichte Außenschicht (409) mindestens eine Schicht aus wasserdichtem Lack, aus wasserdichter Lackierung oder eine Schicht aus Kunststoff umfasst.

7. Verfahren zur Herstellung einer Käseportion (38) nach einem der vorhergehenden Ansprüche, wobei das Verfahren zumindest umfasst:
- einen Schritt zur Bereitstellung der Verpackungsfolie (40);
- einen Schritt zum Falten der Folie (40), in dessen Verlauf mindestens eine erste Falte (54) in der Folie (40) ausgebildet wird, wobei diese die Form einer Hohlschale (84) mit einem Boden (44) und einer vom Boden durch die erste Falte (54) getrennte Seitenwand (46) annimmt;
- einen Schritt zum Füllen der Schale (84), indem der Käse (88) vorzugsweise bei einer Temperatur zwischen 70°C und 85°C in die Schale (84) gegossen wird;
wobei das Verfahren darüber hinaus einen Schritt zur Schwächung der Folie (40) entlang zumindest einer Linie (100), die zum Ausbilden der ersten Falte (54) bestimmt ist, und/oder ein Stauchen zumindest der ersten Falte (54) umfasst, wobei die Schwächung und/oder das Stauchen vorzugsweise ohne Erwärmen der Folie (40) erfolgt/erfolgen.

8. Verfahren nach Anspruch 7, **dadurch gekennzeichnet, dass** im Verlauf des Faltschritts mindestens eine zweite Falte (56) in der Folie (40) ausgebildet wird, wobei die zweite Falte (56) die Seitenwand (46) in mehrere Felder (52) unterteilt, wobei das Verfahren einen Schritt zur Schwächung der Folie (40) entlang zumindest einer Linie (102), die zum Ausbilden zumindest der zweiten Falte (56) bestimmt ist, und/oder ein Stauchen zumindest der zweiten Falte (56) umfasst, wobei die Schwächung und/oder das Stauchen vorzugsweise ohne Erwärmen der Folie (40) erfolgt/erfolgen.

9. Verfahren nach Anspruch 8, **dadurch gekennzeichnet, dass** der Schritt zum Falten der Folie (40) erfolgt, indem die Folie (40) mittels eines Kolbens (62) durch einen Faltschacht (60) gedrückt wird, wobei der Kolben (62) eine Stirnseite (74) und eine Seitenfläche (76) hat, wobei die Stirnseite (74) mit der Folie (40) in Kontakt ist und eine zu derjenigen des Bodens (44) identische Form hat, wobei der Schacht (60) mehrere Lamellen (72) hat, die dazu eingerichtet sind, die erste und zweite Falte (54, 56) herzustellen und die Seitenwand (60) der Schale (82) an die Seitenfläche (76) des Kolbens (62) umzuschlagen.

10. Verfahren nach Anspruch 9, **dadurch gekennzeichnet, dass** das Stauchen der ersten Falte (54) erfolgt, indem die Folie (40) mittels des Kolbens (62) in das Innere eines Hohlraums (66) gezogen wird.

11. Verfahren nach Anspruch 10, **dadurch gekennzeichnet, dass** das Stauchen der ersten Falte (54) durch eine Feder (112) gedämpft wird, die zwischen dem Kolben (62) und einem Stellglied (64) oder zwischen einem den Boden des Hohlraums (66) bildenden Puffer (82) und einem feststehenden Träger (120) eingesetzt ist.

12. Verfahren nach einem der Ansprüche 9 bis 11, **dadurch gekennzeichnet, dass** der Boden (44) der Schale (84) durch Vakuumzugwirkung durch die Stirnseite (74) an der Stirnseite (74) des Kolbens (62) anliegend gehalten wird.

13. Verfahren nach einem der Ansprüche 9 bis 12, **dadurch gekennzeichnet, dass** das Stauchen der zweiten Falte (56) durch Festklemmen zwischen den Lamellen (72) des Schachts (60) und/oder durch Festklemmen zwischen den Lamellen (72) des Schachts (60) und dem Kolben (62) und/oder durch ein Reibungsteil (122) erfolgt, das durch ein elastisches Element (124) mit dem Schacht (60) verbunden ist, welches das Reibungsteil (122) an den Kolben (62) drückt, wobei das Reibungsteil (122) zum Beispiel ein Rollkörper ist.

14. Verfahren nach einem der Ansprüche 7 bis 13, **dadurch gekennzeichnet, dass** das Verfahren umfasst.
- einen Schritt zum Aufsetzen eines Deckels (90) über dem Käse (88);
- einen Schritt zum Falten eines freien Rands (48) der Schale (84) zum Deckel (96) hin, wodurch zumindest eine dritte Falte (58) zwischen der Seitenwand (46) der Schale (84) und dem freien Rand (48) der Schale (84) geschaffen wird;
wobei das Verfahren einen Schritt zur Schwächung der Folie (48) entlang zumindest einer Linie (104), die zum Ausbilden zumindest der dritten Falte (58) bestimmt ist, und/oder ein Stauchen zumindest der dritten Falte (58) umfasst, wobei die Schwächung und/oder das Stauchen ohne Erwärmen erfolgt/erfolgen.

## Claims

1. A fresh, melted fresh or thermized fresh cheese portion (38) comprising:
- a wrapping sheet (40) having a basis weight comprised between 20 to 50 g/m² folded as a hollow shell (84), with a bottom (44) and a sidewall (46) separated from the bottom (44) by a first fold (54);
- a cheese dose (88) wrapped in the sheet (40), the cheese (88) being hot-cast between 70°C and 85°C in the liquid or viscous state in the shell (84);
- a lid (90), tightly sealed to the shell (84), the cheese portion (38) not comprising any dead space;
**characterized in that** the sheet (40) does not include any aluminum layer, the sheet (40) including at least one paper layer (401) having an internal face turned towards the cheese (88) and an external face opposite to the cheese (88), a low temperature sealing layer (405), at least one waterproof layer (407) interposed between the internal face of the paper layer (401) and the sealing layer (405), and at least one waterproof external layer (409) covering the external face of the paper layer (401), the sealing layer (405) being a layer of polymer or a lacquer layer or a varnish layer and having a melting temperature lesser than 90°C, the sealing layer (405) being applied on the external face or on the internal face of the lid (90), the paper layer (401) having a thickness comprised between 20 and 150 µm.

2. The portion according to the claim 1, **characterized in that** the sheet (40) has a first thickness, the paper layer (401) having a second thickness greater than 30% of the first thickness, preferably greater than 50% of the first thickness.

3. The portion according to any of the preceding claims, **characterized in that** the internal face of the paper layer (401) bears a chemical graft of a fatty acid.

4. The portion according to any of the preceding claims, **characterized in that** the internal face of the paper layer (401) has undergone a chemical surface treatment for providing a seal, for example with sulfuric acid, with a product based on silicone or with a fluoride.

5. The portion according to any of the preceding claims, **characterized in that** the paper layer (401) has undergone a bulk treatment for providing a seal and contains a product based on silicone, and/or a fluoride dispersed in the paper in a mass proportion relatively to the papers selected for making the paper layer (401) waterproof.

6. The portion according to any of the preceding claims, **characterized in that** the waterproof layer (407) and/or the waterproof external layer (409) comprises at least one from a waterproof lacquer layer, from a waterproof varnish, from a plastic material layer.

7. A method for manufacturing a cheese portion (38) according to any of the preceding claims, the method comprising at least:
- one step for supplying the wrapping sheet (40);
- one step for folding the sheet (40), during which at least one first fold (54) is formed in the sheet (40), the latter adopting the shape of a hollow shell (84) with a bottom (44) and a sidewall (46) separated from the bottom by the first fold (54);
- one step for filling the shell (84), by casting the cheese (88) into said shell (84), preferably at a temperature comprised between 70°C and 85°C;
the method further comprising a step for weakening the sheet (40) along at least one line (100) intended to form the first fold (54), and/or squeezing at least the first fold (54), the weakening and/or the squeezing being achieved preferably without heating the sheet (40).

8. The method according to claim 7, **characterized in that**, during the folding step, at least one second fold (56) is formed in the sheet (40), the second fold (56) dividing the sidewall (46) into several faces (52), the method comprising a step for weakening the sheet (40) along at least one line (102) in tended to form at least the second fold (56), and/or squeezing of at least the second fold (56), the weakening and/or the squeezing being achieved without heating the sheet (40).

9. The method according to claim 8, **characterized in that** the step for folding the sheet (40) is carried out by pushing the sheet (40) by means of a piston (62) through a folding chimney (60), the piston (62) having a front face (74) and a side surface (76), the front face (74) being in contact with the sheet (40) and having a shape identical with that of the bottom (44), the chimney (60) having a plurality of blades (72) laid out for producing the first and second folds (54, 56) and pushing back the sidewall (60) of the shell (82) against the side surface (76) of the piston (62).

10. The method according to the claim 9, **characterized in that** the squeezing of the first fold (54) is achieved by urging the sheet (40) by means of the piston (62) inside a cell (66).

11. The method according to claim 10, **characterized in that** the squeezing of the first fold (54) is damped by a spring (112) interposed between the piston (62) and an actuator (64) or between a pad (82) making up the bottom of the cell (66) and a fixed support (120).

12. The method according to any of claims 9 to 11, **characterized in that** the bottom (44) of the shell (84) is maintained flattened against the front face (74) of the piston (62) by applying a vacuum through said front face (74).

13. The method according to any of claims 9 to 12, **characterized in that** the squeezing of the second fold (56) is achieved by pinching between blades (72) of the chimney (60) and/or by pinching between the blades (72) of the chimney (60) and the piston (62), and/or by a friction part (122) bound to the chimney (60) through an elastic member (124) urging said friction part (122) against the piston (62), the friction part (122) being a roller for example.

14. The method according to any of claims 7 to 13, **characterized in that** the method comprises:
- a step for depositing a lid (90) on the cheese (88);
- a step for folding a free edge (48) of the shell (84) towards the lid (96), at least generating a third fold (58) between the sidewall (46) of the shell (84) and said free edge (48) of the shell (84) ;
the method comprising a step for weakening the sheet (48) along at least one line (104) intended to form at least the third fold (58), and/or squeezing at least the third fold (58), the weakening and/or the squeezing being achieved without any heating.
